# EUROPEAN PATENT APPLICATION

(11) **EP 3 402 296 A1**
(43) Date of publication of application: **14.11.2018**
(21) Application number: 16887234.9
(22) Date of filing: 30.01.2016
(51) Int. Cl.: H04W 76/02

(54) **TERMINAL DEVICE, NETWORK DEVICE AND DATA TRANSMISSION METHOD**

(71) Applicant: Huawei Technologies Co., Ltd., Longgang District Shenzhen, Guangdong 518129 (CN)
(72) Inventor: TANG, Xun, Shenzhen Guangdong 518129 (CN); QUAN, Wei, Shenzhen Guangdong 518129 (CN); ZHANG, Jian, Shenzhen Guangdong 518129 (CN); LI, Bingzhao, Shenzhen Guangdong 518129 (CN); YANG, Xiaodong, Shenzhen Guangdong 518129 (CN); MIAO, Jinhua, Shenzhen Guangdong 518129 (CN)
(74) Representative: Gill Jennings & Every LLP
(86) International application number: PCT/CN2016/072916
(87) International publication number: WO 2017/128350

(57) **Abstract**

This application relates to the field of communications technologies, and in particular, to a terminal device, a network device, and a data transmission method, to reduce signaling overheads. A base station includes: a first sending module, configured to send a correspondence between a specified service and a logical channel identifier to a first terminal device, where the logical channel identifier corresponds to a common transmission channel used to transmit data of the specified service of a plurality of terminal devices; and a first receiving module, configured to receive an uplink data packet; a processing module, configured to determine, based on the logical channel identifier in the uplink data packet, to send the uplink data packet on the common transmission channel; and a second sending module, configured to transmit the uplink data packet on the common transmission channel; and/or a second receiving module, configured to receive a downlink data packet of the specified service from the common transmission channel, where the first sending module is further configured to broadcast the downlink data packet, and the downlink data packet includes the logical channel identifier. The first terminal device may transmit the specified service by using the common transmission channel, thereby avoiding relatively high signaling overheads for setting up a dedicated bearer and reducing a signaling transmission delay.

## Description

### TECHNICAL FIELD

This application relates to the field of communications technologies, and in particular, to a terminal device, a network device, and a data transmission method.

### BACKGROUND

In a Long Term Evolution (Long Term Evolution, LTE) system, usually, user equipment (User Equipment, UE) is in a Radio Resource Control (Radio Resource Control, RRC) idle state for most of time. When data needs to be sent or received, a dedicated bearer needs to be set up by exchanging a plurality of pieces of signaling on a plurality of interfaces. The UE transmits the data by using the dedicated bearer that is set up.

When needing to transmit data, each UE needs to set up a dedicated bearer by exchanging a plurality of pieces of signaling, thereby causing relatively high signaling overheads.

In conclusion, in a wireless communications system such as an LTE system, a terminal device occupies a dedicated bearer to transmit data. Because each terminal device needs to set up a dedicated bearer when transmitting data, signaling overheads are relatively high.

### SUMMARY

In view of this, this application provides a terminal device, a network device, and a data transmission method, to reduce signaling overheads.

According to a first aspect, an embodiment of this application provides a data transmission method, including:
sending, by a base station, a correspondence between a specified service and a logical channel identifier to a first terminal device; and receiving, by the first terminal device, the correspondence, where the logical channel identifier corresponds to a common transmission channel, and the common transmission channel is used to transmit data of the specified service of a plurality of terminal devices; and
sending, by the first terminal device, an uplink data packet to the base station, where the uplink data packet includes the data of the specified service and the logical channel identifier; transmitting, by the base station, the uplink data packet on the common transmission channel based on the logical channel identifier in the uplink data packet; and/or receiving, by the base station, a downlink data packet of the specified service from the common transmission channel, and broadcasting the downlink data packet, where the downlink data packet includes the logical channel identifier and the data of the specified service; and receiving, by the first terminal device, the downlink data packet from the base station, and determining, based on the logical channel identifier and the correspondence between the specified service and the logical channel identifier, that the downlink data packet includes the data of the specified service.

The first terminal device may transmit the data of the specified service by using the common transmission channel, thereby avoiding relatively high signaling overheads required for setting up a dedicated bearer and reducing a signaling transmission delay.

The common transmission channel may be a channel used to transmit the specified service between the base station and a data gateway. The data gateway is configured to connect to another network. A plurality of terminal devices of a base station may transmit the data of the specified service by using the common transmission channel, that is, the common transmission channel is a transmission channel shared within the base station; or a plurality of terminal devices within a cell may transmit the data of the specified service by using the common transmission channel, that is, the common transmission channel is a transmission channel shared within the cell.

The logical channel identifier may be used to identify a data packet of the specified service on an air interface, and the logical channel identifier may be added to a Media Access Control (Media Access Control, MAC) header in an air interface protocol stack. Certainly, another identifier such as an identifier of a physical channel or an identifier of a transmission channel may alternatively be used to identify the data packet of the specified service on the air interface.

In a possible implementation, the base station sends a broadcast message or a Radio Resource Control RRC connection reconfiguration message. The broadcast message or the Radio Resource Control (Radio Resource Control, RRC) connection reconfiguration message carries the correspondence between the specified service and the logical channel identifier. The first terminal device obtains the correspondence between the specified service and the logical channel identifier from the received broadcast message or the received RRC connection reconfiguration message.

For example, the base station may send the correspondence between the specified service and the logical channel identifier by using the broadcast message and/or the RRC connection reconfiguration message after the common transmission channel is set up. The first terminal device in an idle state may receive the broadcast message and obtain the correspondence from the broadcast message. The first terminal device in an RRC connected state may obtain the correspondence from the RRC connection reconfiguration message.

In a possible implementation, the first terminal device sends the uplink data packet to the base station in a random access process. For example, the uplink data packet is sent by using a message 3 (Message3, MSG3) in the random access process.

In this way, the first terminal device may send the uplink data packet without switching to the connected state. This sending manner is particularly applicable to sending a data packet with a small data volume once.

In a possible implementation, the base station broadcasts the downlink data packet by using a paging message, and the first terminal device receives the downlink data packet of the specified service that is sent by the base station by using the paging message.

In this way, the first terminal device may also receive the downlink data packet without switching to the connected state. This sending manner is also particularly applicable to receiving a data packet with a small data volume once.

In a possible implementation, the base station obtains a correspondence between the specified service and the common transmission channel from a mobility management network element.

In a possible implementation, the common transmission channel is not deleted after the first terminal device enters an idle state.

For example, the common transmission channel is not deactivated, or context of the common transmission channel is not deleted, or the common transmission channel is reserved.

In this way, when needing to transmit the data of the specified service, another terminal device may directly use the common transmission channel without re-setting up the common transmission channel, thereby reducing a data transmission delay.

In a possible implementation, encryption and integrity protection processing of a Packet Data Convergence Protocol (Packet Data Convergence Protocol, PDCP) layer is not performed on the data of the specified service.

That the encryption and integrity protection processing of the PDCP layer is not performed may include simplifying processing on the air interface protocol stack.

In a possible implementation, the data of the specified service is processed in a transparent mode TM at a Radio Link Control RLC layer.

In a possible implementation, the first terminal device sends first information to the mobility management network element. The first information is used to indicate that the first terminal device is associated with the specified service. The mobility management network element sets up the common transmission channel after receiving the first information.

For example, the first information may be used to indicate that the first terminal device is capable of performing the specified service, or the first terminal device can transmit the data of the specified service, or the first terminal device needs to transmit the data of the specified service, or the first terminal device corresponds to the specified service, or the first terminal device is associated with the specified service, or the like.

The first terminal device may trigger, by sending the first information to the mobility management network element, the mobility management network element to set up the common transmission channel.

In a possible implementation, the first information includes an identifier of the specified service. The mobility management network element may prestore the identifier of the specified service or obtain the identifier of the specified service from another network device, and the mobility management network element sets up the common transmission channel after receiving the identifier of the specified service.

In a possible implementation, the first information includes an identifier of the first terminal device. The mobility management network element may pre-record a correspondence between the identifier of the first terminal device and the specified service or a correspondence between feature information of the identifier of the first terminal device and the specified service, or obtain the correspondence from another network device. In this way, when receiving the identifier of the first terminal device, the mobility management network element may determine that the first terminal device is associated with the specified service, and then sets up the common transmission channel used to transmit the specified service. Alternatively, the mobility management network element may pre-record a terminal device identifier list. After receiving the identifier of the first terminal device, if determining that the identifier of the first terminal device is in the identifier list, the mobility management network element sets up the common transmission channel used to transmit the specified service.

In a possible implementation, the first terminal device sends a first message to the mobility management network element, where the first message carries the first information, and the first message is any one of the following messages: an attach request message, a tracking area update request message, and a service request (Service Request, SR) message.

In a possible implementation, the mobility management network element sends the correspondence between the specified service and the common transmission channel to the base station.

In a possible implementation, the mobility management network element transmits the data of the specified service by using the common transmission channel.

Because the mobility management network element is a network element that processes a control plane, transmitting the data of the specified service by using a common transmission channel of the control plane has an advantage of having high reliability and is particularly applicable to data transmission with a small data volume.

In a possible implementation, the mobility management network element performs non-access stratum NAS encryption and/or integrity protection processing on the data of the specified service.

In this way, the PDCP layer does not need to perform the encryption and integrity protection processing, thereby simplifying the processing on the air interface protocol stack.

In a possible implementation, the mobility management network element sends an NAS parameter to a serving gateway, and the NAS parameter is used to perform encryption and/or integrity protection processing on the data of the specified service.

In this way, the NAS encryption and/or integrity protection processing may be performed by the serving gateway, so that the PDCP layer does not need to perform the encryption and integrity protection processing, thereby simplifying the processing on the air interface protocol stack.

In a possible implementation, a root key used in the encryption and/or integrity protection is shared by the common transmission channel.

In a possible implementation, a root key used in the encryption and/or integrity protection is dedicated to the first terminal device, and the sending, by the first terminal device, an uplink data packet to the base station includes: adding, by the first terminal device, the identifier of the first terminal device to the uplink data packet for determining the root key.

According to a second aspect, an embodiment of this application provides a first terminal device, and the first terminal device has a function of implementing behaviors of the first terminal device in the foregoing method. The function may be implemented by using hardware, or may be implemented by hardware executing corresponding software. The hardware or software includes one or more modules corresponding to the foregoing function.

In an optional implementation, a structure of the first terminal device includes a processor, a receiver, and a transmitter. The processor is configured to support the first terminal device to perform a corresponding function in the foregoing method, the receiver is configured to receive the message or the data in the foregoing method, and the transmitter is configured to send the data or the message in the foregoing method. The first terminal device may further include a memory. The memory is configured to couple to the processor and store a necessary program instruction and necessary data of the first terminal device.

According to a third aspect, an embodiment of this application provides a base station, and the base station has a function of implementing behaviors of the base station in the foregoing method. The function may be implemented by using hardware, or may be implemented by hardware executing corresponding software. The hardware or software includes one or more modules corresponding to the foregoing function.

In an optional implementation, a structure of the base station includes: a first transmitter, configured to support the base station to send the message or the data in the foregoing method to the first terminal device; a first receiver, configured to support the base station to receive the message or the data in the foregoing method from the first terminal device; a second receiver, configured to support the base station to receive the message or the data in the foregoing method from the mobility management network element; and a processor, configured to support the base station to perform a corresponding function in the foregoing method. Optionally, the base station may further include: a second transmitter, configured to support the base station to send the message or the data in the foregoing method to the mobility management network element; and a memory, where the memory is configured to couple to the processor and store a necessary program instruction and necessary data of the base station.

According to a fourth aspect, an embodiment of this application provides a mobility management network element, and the mobility management network element has a function of implementing behaviors of the mobility management network element in the foregoing method. The function may be implemented by using hardware, or may be implemented by hardware executing corresponding software. The hardware or software includes one or more modules corresponding to the foregoing function.

In an optional implementation, a structure of the mobility management network element includes: a receiver, configured to support the mobility management network element to receive the message or the data in the foregoing method from the first terminal device, for example, receive the message or the data in the foregoing method from the first terminal device by using the base station, where the receiver may further be configured to support the mobility management network element to receive the message or the data in the foregoing method from the base station; and a processor, configured to support the mobility management network element to perform a corresponding function in the foregoing method. The mobility management network element may further include: a transmitter, where the transmitter may be configured to support the mobility management network element to send the message or the data in the foregoing method to the base station or to the first terminal device by using the base station; and a memory, where the memory is configured to couple to the processor and store a necessary program instruction and necessary data of the mobility management network element.

According to a fifth aspect, an embodiment of this application provides a wireless communications system, and the wireless communications system includes the first terminal device, the base station, and the mobility management network element according to any one of the first aspect to the fourth aspect.

According to a sixth aspect, an embodiment of this application provides a computer storage medium, configured to store a computer software instruction used by the first terminal device according to any one of the first aspect to the fifth aspect, and the computer software instruction includes a program designed to perform the foregoing aspect.

According to a seventh aspect, an embodiment of this application provides a computer storage medium, configured to store a computer software instruction used by the base station according to any one of the first aspect to the fifth aspect, and the computer software instruction includes a program designed to perform the foregoing aspect.

According to an eighth aspect, an embodiment of this application provides a computer storage medium, configured to store a computer software instruction used by the mobility management network element according to any one of the first aspect to the fifth aspect, and the computer software instruction includes a program designed to perform the foregoing aspect.

According to a ninth aspect, an embodiment of this application provides a chip, configured to perform the method performed by the first terminal device according to any one of the first aspect to the fifth aspect.

According to a tenth aspect, an embodiment of this application provides a chip, configured to perform the method performed by the base station according to any one of the first aspect to the fifth aspect.

According to an eleventh aspect, an embodiment of this application provides an apparatus. The apparatus may be executed on a chip and is configured to perform the method performed by the mobility management network element according to any one of the first aspect to the fifth aspect.

According to a twelfth aspect, an embodiment of this application provides a wireless communications system, including the base station and the mobility management network element according to any one of the first aspect to the fifth aspect. Optionally, the wireless communications system may further include the first terminal device according to any one of the first aspect to the fifth aspect.

### BRIEF DESCRIPTION OF DRAWINGS

FIG. 1 is a flowchart of setting up, by UE, a dedicated bearer by using an RRC connection process in an LTE system;
FIG. 2 is a schematic structural diagram of a wireless communications system according to an embodiment of this application;
FIG. 3 and FIG. 4 show two implementation architectures of the wireless communications system shown in FIG. 2;
FIG. 5 is a flowchart of a procedure of setting up a common transmission channel and transmitting data of a specified service according to an embodiment of this application;
FIG. 6 is a flowchart of an optional procedure of setting up a common transmission channel according to an embodiment of this application;
FIG. 7 and FIG. 8 are schematic diagrams of a process of transmitting data of a specified service according to an embodiment of this application;
FIG. 9 is a schematic structural diagram of a Uu protocol stack;
FIG. 10 is a flowchart of a process of transmitting data of a specified service on an air interface according to an embodiment of this application;
FIG. 11 is a schematic structural diagram of a MAC protocol data unit (Protocol Data Unit, PDU) according to an embodiment of this application;
FIG. 12 is a schematic structural diagram of a first terminal device according to an embodiment of this application;
FIG. 13 is a schematic diagram of an optional implementation of the first terminal device shown in FIG. 12;
FIG. 14 is a schematic structural diagram of a base station according to an embodiment of this application;
FIG. 15 is a schematic diagram of an optional implementation of the base station shown in FIG. 14;
FIG. 16 is a schematic structural diagram of a mobility management network element according to an embodiment of this application; and
FIG. 17 is a schematic diagram of an optional implementation of the mobility management network element shown in FIG. 16.

### DESCRIPTION OF EMBODIMENTS

To make the objectives, technical solutions, and advantages of this application more understandable, the following provides detailed descriptions. The detailed descriptions provide various implementations of a device and/or a method by using accompanying drawings such as block diagrams, flowcharts, and/or examples. These block diagrams, flowcharts, and/or examples include one or more functions and/or operations. Persons skilled in the art may understand that each function and/or operation in the block diagrams, the flowcharts, and/or the examples can be performed independently and/or jointly by using various hardware, software, and firmware, and/or any combination thereof.

A procedure of transmitting data by setting up a dedicated bearer by a terminal device in a wireless communications system is described below by using interaction between UE and an eNB in an LTE system as an example.

In the LTE system, usually, the UE is in an RRC idle state for most of time. When needing to send or receive data, the UE exchanges a plurality of pieces of signaling with the evolved NodeB (evolved NodeB, eNB), to enter an RRC connected state. In the RRC connected state, the UE may send and/or receive data. After the UE enters the RRC connected state, if no data is sent or received within a continuous period of time, an RRC connection is released and the UE re-enters the RRC idle state.

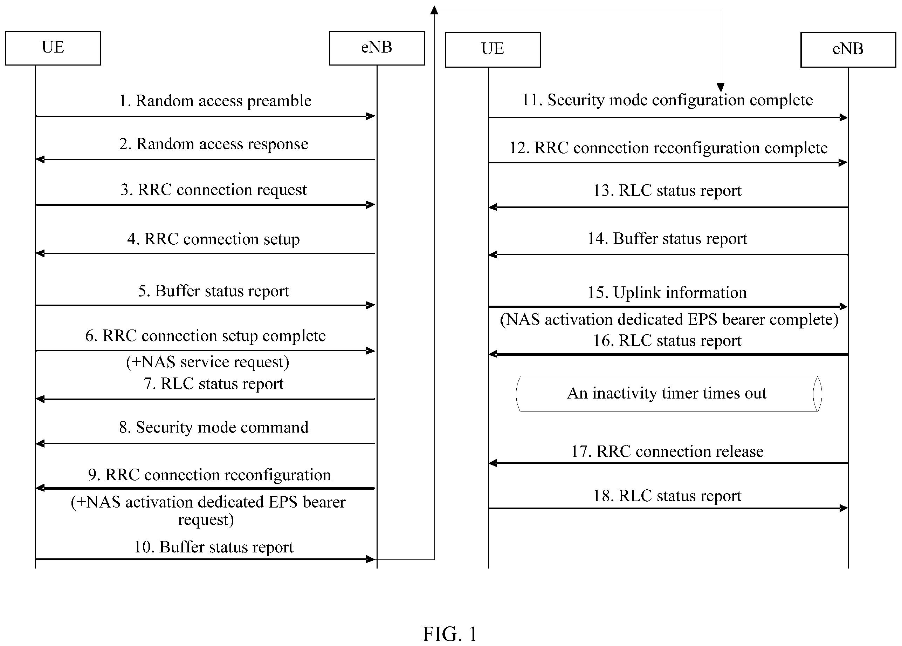

As shown in FIG. 1, when the UE enters the RRC connected state from the RRC idle state, at least 16 pieces of signaling need to be exchanged between the UE and the eNB, comprising as follows:
1. The UE sends a random access preamble to the eNB. 2. The eNB replies with a random access response to the UE. 3. The UE sends an RRC connection request to the eNB. 4. The eNB sends RRC connection setup to the UE. 5. The UE sends a buffer status report to the eNB. 6. The eNB replies with RRC connection setup complete to the UE, where the signaling carries a non-access stratum (Non Access Stratum, NAS) service request. 7. The UE sends a Radio Link Control (Radio Link Control, RLC) status report to the eNB. 8. The eNB sends a security mode command to the UE. 9. The eNB sends RRC connection reconfiguration to the UE, where the signaling carries an NAS activation dedicated evolved packet system (Evolved Packet System, EPS) bearer request. 10. The UE sends a buffer status report to the eNB. 11. The UE sends security mode complete to the eNB. 12. The UE sends RRC connection reconfiguration complete to the eNB. 13. The eNB sends an RLC status report to the UE. 14. The eNB sends a buffer status report to the UE. 15. The UE sends uplink information to the eNB, where the uplink information carries NAS activation dedicated EPS bearer complete. 16. The eNB sends an RLC status report to the UE.

As shown in FIG. 1, when an inactivity timer times out, the eNB initiates an RRC connection release process. In this process, two pieces of signaling needs to be exchanged, including: 17. RRC connection release. 18. An RLC status report.

In the procedure shown in FIG. 1, the eNB and the UE need to exchange 18 pieces of signaling in total to set up and release an RRC connection. However, in a current LTE system, data needs to be transmitted by UE in an RRC connected state to transmit data. Therefore, when UE in an RRC connection idle state needs to transmit data, signaling overheads for converting the RRC states are relatively high, and a delay is increased due to exchanges of a plurality of pieces of signaling.

In addition, each UE needs to set up an RRC connection of the UE when needing to send and/or receive data. Consequently, signaling overheads are relatively high.

For the problem that signaling overheads are relatively high in a wireless communications system such as an LTE system because a terminal device needs to occupy a dedicated bearer when transmitting data, and the dedicated bearer needs to be set up by exchanging a plurality of pieces of signaling, this application provides a solution in which data is transmitted by using a common transmission channel.

The common transmission channel is a transmission channel used by a plurality of terminal devices to transmit data of a specified service. The plurality of terminal devices may be located in a same base station, or may be located in a same cell. The common transmission channel may be a transmission channel between the base station and a data gateway.

For example, the common transmission channel includes a bearer between the base station and a serving gateway and a bearer between the serving gateway and the data gateway.

For another example, the common transmission channel includes a signaling channel between the base station and a mobility management network element, a signaling channel between the mobility management network element and the serving gateway, and the bearer between the serving gateway and the data gateway. The data gateway may be an anchor between the wireless communications network and another network.

The specified service may be a pre-agreed service. The service may be identified by using a service type identifier, or a correspondence may be pre-established between terminal devices and the specified service, to indicate that for the terminal devices, the data of the specified service is to be transmitted. A network device may determine, based on an identifier of a terminal device and the pre-established correspondence between the terminal devices and the specified service, that the data of the specified service needs to be transmitted with the terminal device by using the common transmission channel.

A possible example of the specified service is a service with a relatively small data volume. For this type of service, a ratio of a volume of to-be-transmitted data to signaling overheads is relatively small, and a ratio of the signaling overheads to the volume of the to-be-transmitted data is relatively large. Therefore, data transmission efficiency is relatively low. In this case, the solution using a common transmission channel provided in this application may be used. Before transmitting data, a terminal device transmits data by using a setup common transmission channel, thereby significantly reducing signaling overheads and improving data transmission efficiency.

Another possible example of the specified service is a service, such as an alarm, that has a relatively high requirement on real-time performance. For this type of service, if a dedicated bearer is set up in a current manner before data transmission, a signaling process causes a relatively high delay. Consequently, a requirement of this type of service on a delay may not be satisfied. In this case, the solution using a common transmission channel provided in this application may be used, so that a signaling transmission delay is reduced, thereby satisfying the requirement of this type of service on the delay.

The foregoing two examples are merely schematic. Actually, the solution using a common transmission channel of this application may be used for any service, thereby lowering signaling overheads and reducing a signaling transmission delay.

An example in which a plurality of terminal devices in a cell share a common transmission channel to transmit data of a specified service is used below for description.

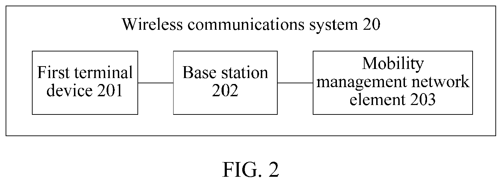

Therefore, FIG. 2 is a schematic structural diagram of a wireless communications system according to an embodiment of this application. As shown in FIG. 2, the wireless communications system 20 includes a first terminal device 201 and a base station 202. Optionally, the wireless communications system 20 may further include a mobility management network element 203.

The first terminal device 201 is located within coverage of the base station 202, and may perform uplink and/or downlink data transmission of a specified service with the base station 202.

The mobility management network element 203 is configured to perform mobility management for the first terminal device 201.

A communications standard of the wireless communications system shown in FIG. 2 includes but is not limited to: a Global System for Mobile Communications (Global System of Mobile communication, GSM), Code Division Multiple Access (Code Division Multiple Access, CDMA) IS-95, Code Division Multiple Access (Code Division Multiple Access, CDMA) 2000, Time Division-Synchronous Code Division Multiple Access (Time Division-Synchronous Code Division Multiple Access, TD-SCDMA), Wideband Code Division Multiple Access (Wideband Code Division Multiple Access, WCDMA), time division duplex-Long Term Evolution (Time Division Duplexing-Long Term Evolution, TDD LTE), frequency division duplex-Long Term Evolution (Frequency Division Duplexing-Long Term Evolution, FDD LTE), Long Term Evolution Advanced (Long Term Evolution-Advanced, LTE-advanced), a personal handy-phone system (Personal Handy-phone System, PHS), wireless fidelity (Wireless Fidelity, WiFi) stipulated in 802.11 series protocols, Worldwide Interoperability for Microwave Access (Worldwide Interoperability for Microwave Access, WiMAX), and various future evolved wireless communications standards.

The first terminal device 201 may be a wireless terminal. The wireless terminal may be a device that provides voice and/or data connectivity to a user, a handheld device having a wireless connection function, or another processing device connected to a wireless modem. The wireless terminal may communicate with one or more core networks by using a radio access network (such as an RAN, Radio Access Network). The wireless terminal may be a mobile terminal such as a mobile phone (or referred to as a "cellular" phone) or a computer having a mobile terminal, for example, may be a portable, pocket-sized, handheld, computer built-in, or in-vehicle mobile apparatus, which exchanges voice and/or data with the radio access network. For example, the wireless terminal may be a device such as a personal communications service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be referred to as a subscriber unit (Subscriber Unit), a subscriber station (Subscriber Station), a mobile station (Mobile Station), a mobile station (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

For the GSM system, the base station 202 may include a base transceiver station (Base Transceiver Station, BTS) and/or a base station controller (Base Station Controller, BSC). For a TD-SCDMA system and a WCDMA system, the base station 202 may include a NodeB (NodeB, NB) and/or a radio network controller (Radio Network Controller, RNC). For an LTE system, the base station 202 may be an eNB.

The mobility management network element 203 may be connected to the base station 202, and may be configured to process a control plane. For the GSM system, the mobility management network element 203 may be an MSC. For the TD-SCDMA system and the WCDMA system, the mobility management network element 203 may be a serving GPRS support node (Serving GPRS Support Node, SGSN). For the LTE system, the mobility management network element 203 may be a mobility management entity (Mobility Management Entity, MME).

Optionally, the wireless communications system 20 may further include a data gateway 205. The data gateway 205 is configured to connect to another network. A common transmission channel may be a transmission channel between the base station 202 and the data gateway 205.

For the GSM system, the data gateway 205 may include a gateway general packet radio service (General Packet Radio Service, GPRS) support node GGSN (Gateway GPRS Support Node, GGSN). For the TD-SCDMA system and the WCDMA system, the data gateway 205 may include a GGSN. For the LTE system such as a TDD LTE system, an FDD LTE system, or an LTE-Advanced system, the data gateway 205 may include a packet data network gateway (Packet Data Network Gateway, P-GW).

The another network may be a packet data network (Packet Data Network, PDN) such as the Internet (Internet), a virtual private network (Virtual Private Network, VPN), an Internet Protocol (Internet Protocol, IP) multimedia service (IP Multimedia Service, IMS) network. Alternatively, the another network may be another wireless communications system. Alternatively, the another network may be a wired network such as a public switched telephone network (Public Switched Telephone Network, PSTN).

The wireless communications system 20 may further include a serving gateway 204. The serving gateway 204 is connected to the base station 202 and is a gateway device configured to access a user plane. For the GSM system, the serving gateway 204 may be a serving GPRS support node (Serving GPRS Support Node, SGSN). For the TD-SCDMA system and the WCDMA system, the serving gateway 204 may be an SGSN. For the LTE system, the serving gateway 204 may be a serving gateway (Serving Gateway, S-GW).

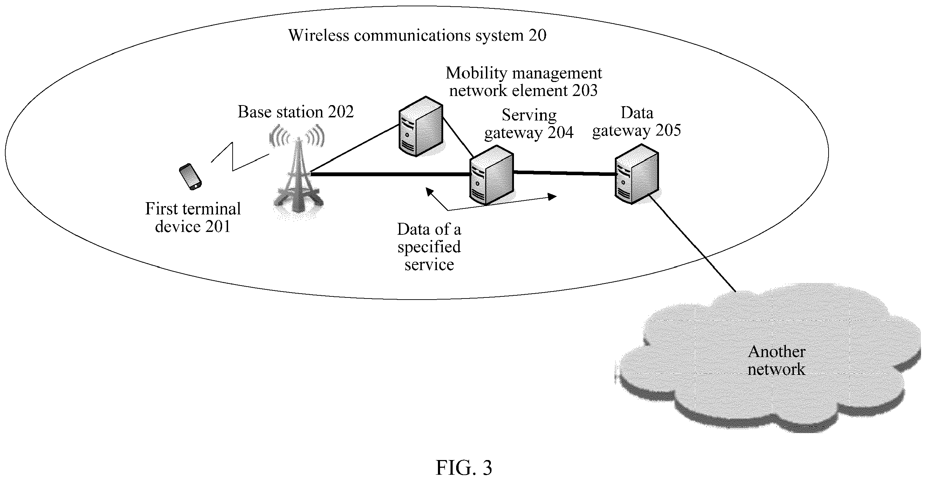

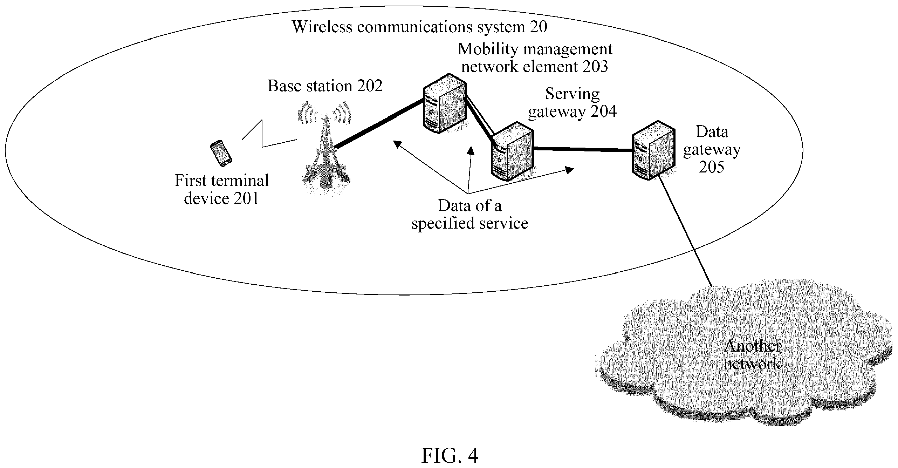

A structure of the wireless communications system 20 including the serving gateway 204, the mobility management network element 203, the first terminal device 201, the base station 202, and the data gateway 205 may be shown in FIG. 3 and FIG. 4. A difference between the wireless communications systems 20 shown in FIG. 3 and FIG. 4 is that implementations of the common transmission channel are different. In the wireless communications system 20 shown in FIG. 3, data of a specified service transmitted on the common transmission channel does not pass through the mobility management network element 203. However, in the wireless communications system 20 shown FIG. 4, data of a specified service transmitted on the common transmission channel passes through the mobility management network element 203.

In FIG. 3, a transmission path of the data of the specified service on the common transmission channel includes:
a path 1: the base station 202-the serving gateway 204-the data gateway 205.

In FIG. 4, a data transmission path of the specified data on the common transmission channel includes:
a path 2: the base station 202-the mobility management network element 203-the serving gateway 204-the data gateway 205.

The mobility management network element 203 is a network element for processing the control plane. Therefore, in the wireless communications system 20 shown in FIG. 4, the common transmission channel includes a signaling channel between the base station 202 and the mobility management network element 203 and a signaling channel between the mobility management network element 203 and the serving gateway 204.

When the specified service is a service with a relatively small data volume, the data of the specified service is transmitted by using the signaling channel, so that a process of setting up a bearer is avoided, thereby further reducing a data transmission delay. In addition, reliability of the signaling channel is usually higher than reliability of the bearer. Therefore, reliability of data transmission can be improved by using the signaling channel.

In the wireless communications system 20 shown in FIG. 3, the specified service is transmitted by using a data transmission channel. That is, the common transmission channel is a common bearer.

When the data of the specified service is transmitted in the wireless communications system 20, a device on the data transmission path needs to determine that the data of the specified service should be transmitted on the common transmission channel.

How to identify a data packet of the specified service on an air interface between the first terminal device 201 and the base station 202, an interface between the base station 202 and the serving gateway 204, an interface between the base station 202 and the mobility management network element 203, an interface between the mobility management network element 203 and the serving gateway 204, and an interface between the serving gateway 204 and the data gateway 205 are separately described below.

### 1. On the air interface between the first terminal device 201 and the base station 202

For example, when the data of the specified service is transmitted between the first terminal device 201 and the base station 202, for uplink transmission, the first terminal device 201 needs to add an air interface identifier, such as a logical channel identifier, to an uplink data packet sent to the base station 202, and the air interface identifier corresponds to the specified service. In this way, after receiving the uplink data packet sent by the first terminal device 201, the base station 202 may determine, based on the air interface identifier in the uplink data packet, that data included in the uplink data packet is the data of the specified service, so that the base station 202 transmits the uplink data packet on the common transmission channel. There is a correspondence between the air interface identifier and the common transmission channel.

For downlink transmission, after receiving a downlink data packet from the common transmission channel, the base station 202 broadcasts the downlink data packet. The downlink data packet includes the foregoing air interface identifier. After receiving the downlink data packet, the first terminal device 201 determines, based on the air interface identifier in the downlink data packet, that the downlink data packet includes the data of the specified service.

### 2. On the interface between the base station 202 and the serving gateway 204

Using the LTE system as an example, the data packet of the specified service is transmitted on an S1 interface between the base station 202 and the serving gateway 204 by using an S1 GPRS Tunneling Protocol (GPRS Tunnel Protocol, GTP) tunnel. The S1 GTP tunnel may be identified by using S1 tunnel endpoint identifiers (Tunnel Endpoint IDentification, TEID) assigned by the base station 202 and the serving gateway 204.

It is different from a current LTE system that the TEIDs are not dedicated to a particular terminal device, but are shared by a plurality of terminal devices within a cell of the base station 202 or a plurality of terminal devices of the base station 202 during transmission of the data of the specified service. Specifically, the terminal devices that share the TEIDs may be determined based on a specific implementation of a product.

The base station 202 notifies the serving gateway 204 of the S1 TEID assigned by the base station 202, and the serving gateway 204 notifies the base station 202 of the S1 TEID assigned by the serving gateway 204.

### 3. On the interface between the serving gateway 204 and the data gateway 205

Still using the LTE system as an example, the interface between the serving gateway 204 and the data gateway 205 is an S5 interface, and the data packet of the specified service is transmitted on the interface by using an S5 GTP tunnel. The S5 GTP tunnel may be identified by using S5 TEIDs assigned by the serving gateway 204 and the data gateway 205. The serving gateway 204 assigns an S5 downlink (DownLink, DL) TEID, and the data gateway 205 assigns an S5 uplink (UpLink, UL) TEID.

It is different from the current LTE system that the TEIDs are not dedicated to a particular terminal device, but are shared by a plurality of terminal devices within a cell of the base station 202 during transmission of the data of the specified service, or a plurality of terminal devices under coverage of the base station 202 during transmission of the data of the specified service, or a plurality of terminal devices, that access a user plane by using the serving gateway 204, during transmission of the data of the specified service. Specifically, the terminal devices that share the TEIDs may be determined based on a specific implementation of a product.

The serving gateway 204 notifies the data gateway 205 of the S5 TEID assigned by the serving gateway 204, and the data gateway 205 notifies the serving gateway 204 of the S5 TEID assigned by the data gateway 205.

### 4. On the interface between the base station 202 and the mobility management network element 203

Using the LTE system as an example, if the data of the specified service is transmitted by using the mobility management network element 203, for example, as shown in FIG. 4, the data packet of the specified service is transmitted by using an S1 connection on an S1 interface between the base station 202 and the mobility management network element 203. The S1 connection is a connection between control planes, is a signaling channel, and may be identified by using S1AP IDs assigned by the base station 202 and the mobility management network element 203.

Optionally, the base station 202 may not know that the common transmission channel for the specified service needs to be set up. In this case, the base station 202 may assign a terminal device-dedicated identifier to the signaling channel. The base station 202 sends a message sent by the first terminal device 201 to the mobility management network element 203 to the mobility management network element 203. The message carries first information, and the first information is used to indicate that the first terminal device 201 is associated with the specified service.

For example, the first information may be used to indicate that the first terminal device 201 is capable of performing the specified service, or the first terminal device 201 can transmit the data of the specified service, or the first terminal device 201 needs to transmit the data of the specified service, or the first terminal device 201 corresponds to the specified service, or the first terminal device 201 is associated with the specified service, or the like.

If determining, based on the first information, that the common transmission channel for the specified service needs to be set up, the mobility management network element 203 instructs the base station 202 to cancel the assigned terminal device-dedicated identifier. After receiving the notification, the base station 202 cancels the terminal device-dedicated identifier, and assigns a value of the terminal device-dedicated identifier to a common identifier of the signaling channel. The mobility management network element 203 assigns a common identifier to the signaling channel, and notifies the base station 202 of the assigned common identifier.

It is different from the current LTE system that the common identifiers are not dedicated to a particular terminal device, but are shared by a plurality of terminal devices within a cell of the base station 202 during transmission of the data of the specified service, or a plurality of terminal devices under coverage of the base station 202 during transmission of the data of the specified service. Specifically, the terminal devices that share the common identifiers may be determined based on a specific implementation of a product.

### 5. On the interface between the mobility management network element 203 and the serving gateway 204

Still using the LTE system as an example, if the data of the specified service is transmitted by using the mobility management network element 203, for example, as shown in FIG. 4, the data packet of the specified service is transmitted by using a signaling channel on an S11 interface between the serving gateway 204 and the mobility management network element 203. The signaling channel on the S11 interface may be identified by using common identifiers assigned by the base station 202 and the mobility management network element 203.

It is different from the current LTE system that the common identifiers are not dedicated to a particular terminal device, but are shared by a plurality of terminal devices within a cell of the base station 202 during transmission of the data of the specified service, or a plurality of terminal devices under coverage of the base station 202 during transmission of the data of the specified service, or a plurality of terminal devices, that access a user plane by using the serving gateway 204, during transmission of the data of the specified service, or a plurality of terminal devices, that process the control plane by using the mobility management network element 203, during transmission of the data of the specified service. Specifically, the terminal devices that share the common identifiers may be determined based on a specific implementation of a product.

The serving gateway 204 notifies the mobility management network element 203 of the common identifier assigned by the serving gateway 204, and the mobility management network element 203 notifies the serving gateway 204 of the common identifier assigned by the mobility management network element 203.

### 6. On the interface between the serving gateway 204 and the data gateway 205

Still using the LTE system as an example, the data packet of the specified service is transmitted by using an S5 GTP tunnel on an S5 interface between the serving gateway 204 and the data gateway 205. The S5 GTP tunnel may be identified by using S5 TEIDs assigned by the serving gateway 204 and the data gateway 205. The serving gateway 204 assigns an S5 downlink (DownLink, DL) TEID, and the data gateway 205 assigns an S5 uplink (UpLink, UL) TEID.

It is different from the current LTE system that the TEIDs are not dedicated to a particular terminal device, but are shared by a plurality of terminal devices within a cell of the base station 202 during transmission of the data of the specified service, or a plurality of terminal devices under coverage of the base station 202 during transmission of the data of the specified service, or a plurality of terminal devices, that access a user plane by using the serving gateway 204, during transmission of the data of the specified service. Specifically, the terminal devices that share the TEIDs may be determined based on a specific implementation of a product.

The serving gateway 204 notifies the data gateway 205 of the S5 TEID assigned by the serving gateway 204, and the data gateway 205 notifies the serving gateway 204 of the S5 TEID assigned by the data gateway 205.

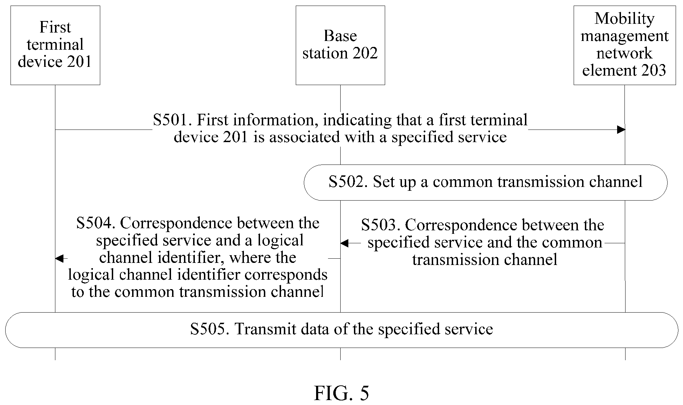

A process of setting up the common transmission channel and transmitting the data of the specified service by using the common transmission channel is described below with reference to a flowchart shown in FIG. 5.

A procedure shown in FIG. 5 includes the following steps.

S501. The first terminal device 201 sends first information to the mobility management network element 203, where the first information is used to indicate that the first terminal device 201 is associated with a specified service.

S502. After receiving the first information, the mobility management network element 203 sets up a common transmission channel, where the common transmission channel is used to transmit data of the specified service of a plurality of terminal devices.

S503. The mobility management network element 203 sends a correspondence between the specified service and the common transmission channel to the base station 202.

S504. The base station 202 sends a correspondence between the specified service and a logical channel identifier to the first terminal device 201, where the logical channel identifier corresponds to the common transmission channel.

S505. After receiving the correspondence between the specified service and the logical channel identifier that is sent by the base station 202, the first terminal device 201 performs uplink and/or downlink data transmission of the specified service.

In the foregoing steps, after the common transmission channel is set up, the first terminal device 201 may alternatively not transmit the data of the specified service. When needing to transmit the data, the first terminal device 201 transmits the data of the specified service by using the setup common transmission channel.

In addition, after a terminal device sends the first information, the mobility management network element 203 sets up the common transmission channel, and another terminal device transmits the data of the specified service by using the setup common transmission channel.

Therefore, the setup common transmission channel may not be deleted. For example, the common transmission channel is not deleted after the first terminal device 201 enters an idle state. For example, the common transmission channel is not deactivated, or context of the common transmission channel is not deleted, or the common transmission channel is reserved. In this way, when needing to transmit the data of the specified service, another terminal device may transmit the data of the specified service by using the setup common transmission channel without re-setting up a common transmission channel, thereby lowering signaling overheads and reducing a data transmission delay.

Alternatively, the setup common transmission channel is deleted after being reserved for a period of time.

Optionally, the common transmission channel may be deleted when any one or more of the following cases occur: the base station 202 is restarted, a preset timer times out, transmission of the data of the specified service within a first cell is abnormal, or the common transmission channel is deleted in an operation and maintenance (Operation & Maintenance, O&M) manner.

The foregoing steps are described below in detail.

S501. The first terminal device 201 sends first information to the mobility management network element 203, where the first information is used to indicate that the first terminal device 201 is associated with a specified service.

The first terminal device 201 may send a first message to the mobility management network element 203, and the first message carries the first information.

For example, for the TD-SCDMA system, the WCDMA system, the LTE system, the subsequent evolved system, and the like, the message may be an uplink non-access stratum (Non Access Stratum, NAS) message.

Optionally, the first message may be any one of the following:
an attach request message;
a tracking area update request message;
a service request SR message.

The first information may be used to indicate that the first terminal device 201 is capable of performing the specified service, or the first terminal device 201 can transmit the data of the specified service, or the first terminal device 201 needs to transmit the data of the specified service, or the first terminal device 201 corresponds to the specified service, or the first terminal device 201 is associated with the specified service, or the like.

Optionally, the first information may be an identifier of the first terminal device 201 or an identifier of the specified service.

For example, the first information includes the identifier of the specified service. The mobility management network element 203 may prestore the identifier of the specified service or read the identifier of the specified service from another network device. After receiving the identifier of the specified service, the mobility management network element 203 sets up the common transmission channel.

For example, the first information includes the identifier of the first terminal device 201. The mobility management network element 203 may pre-record a correspondence between the identifier of the first terminal device 201 and the specified service or a correspondence between feature information of the identifier of the first terminal device 201 and the specified service, or obtain the correspondence from another network device. In this way, when receiving the identifier of the first terminal device 201, the mobility management network element 203 may determine that the first terminal device 201 is associated with the specified service, and then sets up the common transmission channel used to transmit the specified service. Alternatively, the mobility management network element 203 may pre-record a terminal device identifier list. After receiving the identifier of the first terminal device 201, if determining that the identifier of the first terminal device 201 is in the identifier list, the mobility management network element 203 sets up the common transmission channel used to transmit the specified service.

S502. After receiving the first information, the mobility management network element 203 sets up a common transmission channel, where the common transmission channel is used to transmit data of the specified service of a plurality of terminal devices.

Optionally, the common transmission channel may be set up in any of the following processes:
Process 1: A process of registering, by the first terminal device 201, with the mobility management network element 203. For example, for the TD-SCDMA system, the WCDMA system, the LTE system, and the like, the process may be an attach (attach) process. For the process, refer to descriptions in section 5.3.2 in 3rd Generation Partnership Project (3rd Generation Partnership Project, 3GPP) technical specification (Technical Specification, TS) 23.401 v11.4.0.
Process 2: A process of registering, by another terminal device, with the mobility management network element 203.
Process 3: A process of requesting, by the first terminal device 201, the mobility management network element 203 to transmit the data of the specified service. For example, for the TD-SCDMA system, the WCDMA system, the LTE system, and the like, the process may be a service request (service request) process. For the process, refer to descriptions in section 5.3.4 in 3GPP TS23.401 v11.4.0.
Process 4: A process of requesting, by another terminal device, the mobility management network element 203 to transmit the data of the specified service.

For two optional implementations of the process 1 and the process 2, a message that is sent by a terminal device and that triggers the wireless communications system 20 to determine that the common transmission channel needs to be set up may be a registration request message or a tracking area update request message. For example, for the TD-SCDMA system, the WCDMA system, the LTE system, the subsequent evolved system, and the like, the registration request message may be an attach request (attach request) message, and the tracking area update request message may be a routing area update request message.

For two optional implementations of the process 3 and the process 4, a message that is sent by a terminal device and that triggers the mobility management network element 203 to set up the common transmission channel may be a service request message. For example, for the TD-SCDMA system, the WCDMA system, the LTE system, the subsequent evolved system, and the like, the message may be a service request (service request) message.

In a common transmission channel setup process, an identifier used to identify the common transmission channel is assigned to each of the foregoing interfaces. In this way, when a data packet of the specified service is transmitted, a device on a data transmission path can determine a common transmission channel on which the data packet should be transmitted.

Optionally, in the common transmission channel setup process, a signaling channel and the common transmission channel need to be separately set up.

### 1. Signaling channel

As described above, the base station 202 first assigns a terminal device-dedicated identifier to a signaling channel on the interface between the base station 202 and the mobility management network element 203. After the base station 202 sends the first information sent by the first terminal device 201 to the mobility management network element 203 to the mobility management network element 203, the mobility management network element 203 sets up, based on the first information, the common transmission channel for the specified service, and instructs the base station 202 to cancel the assigned terminal device-dedicated identifier. After receiving the notification, the base station 202 cancels the terminal device-dedicated identifier and assigns a value of the terminal device-dedicated identifier to a common identifier of the signaling channel. The mobility management network element 203 assigns a common identifier to the signaling channel, and notifies the base station 202 of the assigned common identifier.

When the common transmission channel includes the signaling channel between the base station 202 and the mobility management network element 203, setting up the signaling channel is equivalent to setting up a part of the common transmission channel.

### 2. Common transmission channel

Optionally, the mobility management network element 203 may request, by sending a session setup request message (for example, the message may be a GTP session creation request message for the LTE system) to the serving gateway 204, the serving gateway 204 to set up a channel used to transmit the data packet of the specified service between the base station 202 and the serving gateway 204. After receiving the session setup request message, the serving gateway 204 assigns an uplink identifier to the channel (for example, the uplink identifier may be an uplink S1 TEID for the LTE system). The mobility management network element 203 further forwards a downlink identifier (for example, the downlink identifier may be a downlink S1 TEID for the LTE system) assigned by the base station 202 to the channel to the serving gateway 204.

In addition, after receiving the session setup request message sent by the mobility management network element 203, the serving gateway 204 may further assign a downlink identifier (the downlink identifier may be a downlink S5 TEID for the LTE system) to a channel between the serving gateway 204 and the data gateway 205, and sends the assigned downlink identifier to the data gateway 205 (for example, for the LTE system, the serving gateway 204 may send the downlink identifier by using a request message for creating a common transmission channel for a service). After receiving the downlink identifier assigned by the serving gateway 204 to the channel, the data gateway 205 assigns an uplink identifier (the uplink identifier may be an uplink S5 TEID for the LTE system) to the channel, and returns the assigned uplink identifier to the serving gateway 204.

The common transmission channel is set up through the foregoing process.

The common transmission channel setup process is described below by using an example in which a common transmission channel is set up during registration in the LTE system.

S503. The mobility management network element 203 sends a correspondence between the specified service and the common transmission channel to the base station 202.

After receiving the correspondence, the base station 202 determines that the setup common transmission channel corresponds to the specified service, and configures an air interface parameter, for example, the foregoing logical channel identifier, for the common transmission channel. The base station 202 configures the air interface parameter of the common transmission channel.

In addition, the base station 202 may further configure an air interface transmission mode (for example, for the TD-SCDMA system, the WCDMA system, the LTE system, the subsequent evolved system, and the like, a transmission mode at a Radio Link Control (Radio Link Control) layer is a transparent mode (Transparent Mode, TM), an acknowledged mode (Acknowledged Mode, AM), an unacknowledged mode (Unacknowledged Mode, UM)), or the like. The air interface transmission mode may alternatively be preset to a particular transmission mode, for example, the TM. In this case, the air interface parameter delivered by the base station 202 may not include this parameter.

The base station 202 may further configure whether a PDCP layer protocol stack has an encryption and integrity protection function (for example, for the TD-SCDMA system, the WCDMA system, the LTE system, the subsequent evolved system, and the like, whether a Packet Data Convergence Protocol (packet Data Convergence Protocol, PDCP) layer has an encryption and integrity protection function). The common transmission channel is shared by a plurality of terminal devices during transmission of the data of the specified service, and when the first terminal device 201 transmits the data of the specified service, it is possible that there is no security context dedicated to the terminal device on a side of the wireless communications system 20. Therefore, encryption and integrity protection cannot be performed on the air interface by using a security mechanism. Therefore, optionally, the PDCP layer protocol stack is set to not have the air interface encryption and integrity protection function or is preset to not have the air interface encryption and integrity protection function. In this case, the air interface parameter delivered by the base station 202 may not include this parameter.

The base station 202 may further configure whether the PDCP layer protocol stack has an Internet Protocol (Internet Protocol, IP) header compression function. Optionally, the PDCP layer protocol stack may be preset to not have the header compression function. In this case, the air interface parameter delivered by the base station 202 may not include this parameter.

Optionally, the air interface parameter may further be preconfigured in the terminal device and/or the base station 202. In this case, the base station 202 no longer needs to broadcast the air interface parameter by using a broadcast message.

S504. The base station 202 sends a correspondence between the specified service and a logical channel identifier to the first terminal device 201, where the logical channel identifier corresponds to the common transmission channel.

The base station 202 may send a downlink message (For example, the message is an air interface configuration message; the message may be a radio bearer setup (Radio Bearer Setup) message or a radio bearer reconfiguration (Radio Bearer Reconfiguration) message for the TD-SCDMA system and the WCDMA system; or the message may be RRC connection reconfiguration (RRC Connection Reconfiguration) for the LTE system, the subsequent evolved system, and the like) to the first terminal device 201, and delivers the air interface parameter of the common transmission channel; and/or
the base station 202 broadcasts the air interface parameter of the common transmission channel by using the broadcast message.

Optionally, to enable a plurality of terminal devices to transmit the data of the specified service by directly using the common transmission channel without setting up a dedicated bearer. Regardless of whether the base station 202 delivers the foregoing air interface parameter in the common transmission channel setup process, the base station 202 needs to broadcast the air interface parameter after the common transmission channel is set up, so that all of the plurality of terminal devices may obtain the air interface parameter of the common transmission channel, and transmit the data of the specified service by using the common transmission channel by using the air interface parameter.

S505. After receiving the correspondence between the specified service and the logical channel identifier that is sent by the base station 202, the first terminal device 201 performs uplink and/or downlink data transmission of the specified service.

Optionally, transmission of the data of the specified service may be uplink data transmission only, downlink data transmission only, or bidirectional transmission.

### 1. Air interface transmission

Optionally, the foregoing air interface parameter may include the logical channel identifier of the common transmission channel on the air interface.

Optionally, the first terminal device 201 may send an uplink data packet to the base station 202, where the uplink data packet includes the data of the specified service and the logical channel identifier, and the base station 202 transmits the uplink data packet on the common transmission channel based on the logical channel identifier in the uplink data packet; and/or
optionally, the base station 202 receives a downlink data packet of the specified service from the common transmission channel, and broadcasts the downlink data packet, where the downlink data packet includes the data of the specified service and the logical channel identifier, and the first terminal device 201 determines, based on the logical channel identifier and the correspondence between the logical channel identifier and the specified service, that the downlink data packet is a data packet of the specified service.

An air interface data packet of the specified service may be transmitted on the air interface through one of the following message processes. It should be noted that an available message process is not limited to the following processes.

### Message process 1: Random access process and paging process

For example, the first terminal device 201 sends the uplink data packet to the base station 202 by using a message 3 (Message3, MSG3) in a random access process.

For another example, the first terminal device 201 receives a paging message broadcast by the base station 202, and the paging message carries the downlink data packet.

If the first terminal device 201 is in an idle state, the first terminal device 201 may transmit the data of the specified service through the random access process and the paging process.

### Message process 2: Scheduling process

For example, the first terminal device 201 may send the uplink data packet on an uplink resource indicated by an uplink grant (UL_Grant) sent by the base station 202.

For another example, the first terminal device 201 may receive the downlink data packet on a downlink resource indicated by a downlink assignment (DL_Assignment) sent by the base station 202.

### 2. Transmission of the data of the specified service on the common transmission channel.

As described above, the common transmission channel may be a common transmission channel between the base station 202 and the data gateway 205. In this case, that the data of the specified service is transmitted on the common transmission channel may mean that the data of the specified service is transmitted between the base station 202 and the data gateway 205.

As described above, there may be two paths for transmitting the data of the specified service on the common transmission channel:
a path 1: the base station 202-the serving gateway 204-the data gateway 205; and
a path 2: the base station 202-the mobility management network element 203-the serving gateway 204-the data gateway 205.

Using the LTE system as an example, if the first terminal device 201 is in an idle state, downlink data of the specified service may be sent through the paging process. Optionally, the paging message may be sent in all cells within a tracking area (Tracking Area, TA) of the first terminal device 201. The cells may belong to a plurality of base stations 202. That is, after the downlink data reaches the serving gateway 204, if discovering that there is no dedicated connection for the first terminal device 201, the serving gateway 204 forwards the downlink data to the mobility management network element 203. The mobility management network element 203 sends the paging message in all the cells with the TA of the first terminal device 201 by using at least one base station. The paging message includes the downlink data of the specified service.

The TA is determined by the mobility management network element 203. Usually, in the LTE system, when the first terminal device 201 registers with a wireless network, for example, when the first terminal device 201 attaches to the wireless network, the mobility management network element 203 determines a group of TAs for the first terminal device 201. If a movement of the first terminal device 201 exceeds a range of the group of TAs, the first terminal device 201 sends a TA update request to the mobility management network element 203. After receiving the TA update request, the mobility management network element 203 re-specifies a group of TAs for the first terminal device 201. Therefore, optionally, when the first terminal device 201 registers with the mobility management network element 203, the mobility management network element 203 may also determine a group of TAs for the first terminal device 201, and when a movement of the first terminal device 201 exceeds a range of the group of TAs, the mobility management network element 203 re-specifies a group of TAs for the first terminal device 201.

Still using the LTE system as an example, if the first terminal device 201 is in an RRC connected state, after the downlink data of the specified service reaches the serving gateway 204, the serving gateway 204 can find the dedicated connection for the first terminal device 201, that is, a dedicated connection between the serving gateway 204 and the base station 202. The dedicated connection may be updated through cell handover in a moving process of the first terminal device 201. That is, if the base station 202 to which a cell in which the first terminal device 201 is located belongs changes, the serving gateway 204 can learn, through a cell handover process, the base station 202 to which the first terminal device 201 moves, so that when the downlink data of the specified service arrives, the serving gateway 204 knows that the downlink data should be sent to which base station 202. After the base station 202 receives the downlink data of the specified service, because the first terminal device 201 is in an RRC connected state, the base station 202 knows the cell in which the first terminal device 201 is located, so that the base station 202 may send the downlink data of the specified service to the first terminal device 201 in only the cell in which the first terminal device 201 is located.

Transmission of the data of the specified service may be only uplink transmission, only downlink transmission, or bidirectional transmission.

A path for the uplink transmission of the data of the specified service may be one of the following paths:
an uplink path 1: the base station 202-->the serving gateway 204-->the data gateway 205; or
an uplink path 2: the base station 202-->the mobility management network element 203-->the serving gateway 204-->the data gateway 205.

A path for the downlink transmission of the data of the specified service may be one of the following paths:
a downlink path 1: the data gateway 205-->the serving gateway 204-->the base station 202; or
a downlink path 2: the data gateway 205-->the serving gateway 204-->the mobility management network element 203-->the base station 202.

For the bidirectional transmission of the data of the specified service, any one of the following combinations may be used:
the uplink path 1 and the downlink path 1;
the uplink path 2 and the downlink path 1;
the uplink path 1 and the downlink path 2; and
the uplink path 2 and the downlink path 1.

Optionally, encryption and integrity protection on the data packet of the specified service transmitted by the first terminal device 201 on the common transmission channel is performed by using a protocol layer parameter of a protocol layer (optionally, the protocol layer is an NAS layer for the LTE system) that is between the first terminal device 201 and the mobility management network element 203 and that is configured to perform mobility management and session management.

Optionally, a root key used in the encryption and integrity protection is shared by the common transmission channel; or
a root key used in the encryption and integrity protection is dedicated to the first terminal device 201. In this case, the first terminal device 201 adds the identifier of the first terminal device 201 to the uplink data packet of the specified service. The mobility management network element 203 (the uplink path 2) or the serving gateway 204 (the uplink path 1) may prestore a correspondence between the identifier of the first terminal device 201 and the root key of the first terminal device 201, obtain the identifier of the first terminal device 201 from the uplink data packet sent by the first terminal device 201, and determine the root key based on the obtained identifier of the first terminal device 201.

When the wireless communications system 20 is classified into a radio access network and a core network shown in FIG. 3 and FIG. 4, encryption and integrity protection for a data packet of the specified service transmitted by the first terminal device 201 on the common transmission channel is performed by a protocol layer parameter of a protocol layer that is between the first terminal device 201 and the mobility management network element 203 and that is configured to perform mobility management and session management.

Optionally, for the common transmission channel shown in FIG. 4, the mobility management network element 203 completes authentication and key agreement for the first terminal device 201 and the encryption and integrity protection on the data packet of the specified service. Optionally, the mobility management network element 203 obtains the identifier of the first terminal device 201 from the received uplink data packet, and determines the root key based on the identifier of the first terminal device 201.

A common transmission channel setup process is described below by using an example 1.

### [Example 1]

In the example 1, the common transmission channel setup process is described by using a registration process in the LTE system as an example.

In the example 1, the first terminal device 201 is UE. The UE transmits only data of a specified service and is referred to as "UE of a specified service". The data gateway 205 is a P-GW, the base station 202 is an eNB, the serving gateway 204 is an S-GW, and the mobility management network element 203 is an MME. The MME determines, based on an identifier of the UE, that a common transmission channel needs to be set up.

Usually, the UE needs to register with a core network when being started. An initial registration request message includes the identifier of the UE - an international mobile subscriber identity (International Mobile Subscriber Identification Number, IMSI). The IMSI is assigned by an operator when a user opens an account. Therefore, when receiving the IMSI, the core network may determine a service type of the user. If the service type is a specified service (such as a periodic reporting service of a meter or a water meter, interfaces may be configured for the specified service, that is, the common transmission channel is set up.

Descriptions are provided below by distinguishing different interfaces.

### 1. S1-MME interface

On the S1-MME interface, the common transmission channel is identified by using an S1AP ID pair between the MME and the eNB.

When the UE of the specified service registers with the core network, the eNB needs to send an S1AP initial user message (S1AP Initial UE Message) to the MME. The message carries a registration request (such as an attach request). Before the message is sent, on a side of the eNB, a dedicated eNB UE S1AP ID is assigned to the UE. After obtaining registration information of the UE, the MME replies with an initial context setup request message (Initial Context Setup Request) to the eNB. Because a service needs to be used by the UE is the specified service, a side of the MME assigns an MME ServiceType S1AP ID to the specified service instead of assigning a dedicated MME UE S1AP ID to the UE, instructs, by using the initial context setup request (Initial Context Setup Request) message, the eNB to cancel the dedicated eNB UE S1AP ID on the side of eNB, and assigns a value of the eNB UE S1AP ID to an eNB ServiceType S1AP ID.

### 2. S1-U Interface

On the S1-U interface, the common transmission channel is identified by using a GTP tunnel TEID pair between the S-GW and the eNB.

After receiving the registration request of the UE of the specified service, the MME triggers the S-GW to set up a common S1 GTP tunnel corresponding to the service. The S-GW assigns an uplink S1 TEID to the common S1 GTP tunnel and returns the uplink S1 TEID to the MME. The MME sends, by using the initial context setup request message, a request for activating the common transmission channel for the service to the eNB, to trigger the eNB to set up the S1 GTP tunnel corresponding to the service. The eNB assigns a downlink S1 TEID to the service and returns the downlink S1 TEID to the MME. Then, the MME notifies the eNB of the uplink S1 TEID, and notifies the S-GW of the downlink S1 TEID.

### 3. S5 interface

On the S5 interface, the common transmission channel is identified by using a GTP tunnel TEID pair between the S-GW and the P-GW.

After receiving the registration request of the UE of the specified service, the MME triggers the S-GW to set up a common S5 GTP tunnel for the specified service. The S-GW assigns a downlink S5 TEID to the common S5 GTP tunnel. The S-GW sends a request for creating a common transmission channel for a service (Create Shared Service Bearer Request) to the P-GW. The request includes the downlink S5 TEID, and indicates that this is a common S5 interface configuration for the specified service. After receiving the message, the P-GW sets up the common S5 GTP tunnel and assigns an uplink S5 TEID, and then notifies the S-GW.

### 4. Uu interface

After completing related configurations of the registration of the UE of the specified service, the MME sends, by using the initial context setup request message (Initial Context Setup Request), a request for activating the common transmission channel for the specified service to the eNB. Then, the eNB sends an RRC connection reconfiguration (RRC Connection Reconfiguration) message to the UE. A logical channel identifier (Logical Channel ID, LCID) used by the specified service, that is, a logical channel identifier of the common transmission channel on an air interface, is indicated in the message. Other air interface configurations of the common transmission channel may include: a TM mode is used at the RLC layer, the PDCP layer has no encryption and integrity protection function, and an optional IP header compression function. Optional, the foregoing air interface configurations may be preconfigured in the UE or may be notified to the UE by using a broadcast message.

After a procedure in which first UE of the specified service registers with the core network is completed, configurations of the common S5 interface, S1 interface, and Uu interface for the specified service are set up. Subsequently, if another UE of the specified service submits a registration request to the MME by using the same eNB, only the configuration of the Uu interface needs to be notified to the UE, and related configurations of the S1 interface are not notified to the UE.

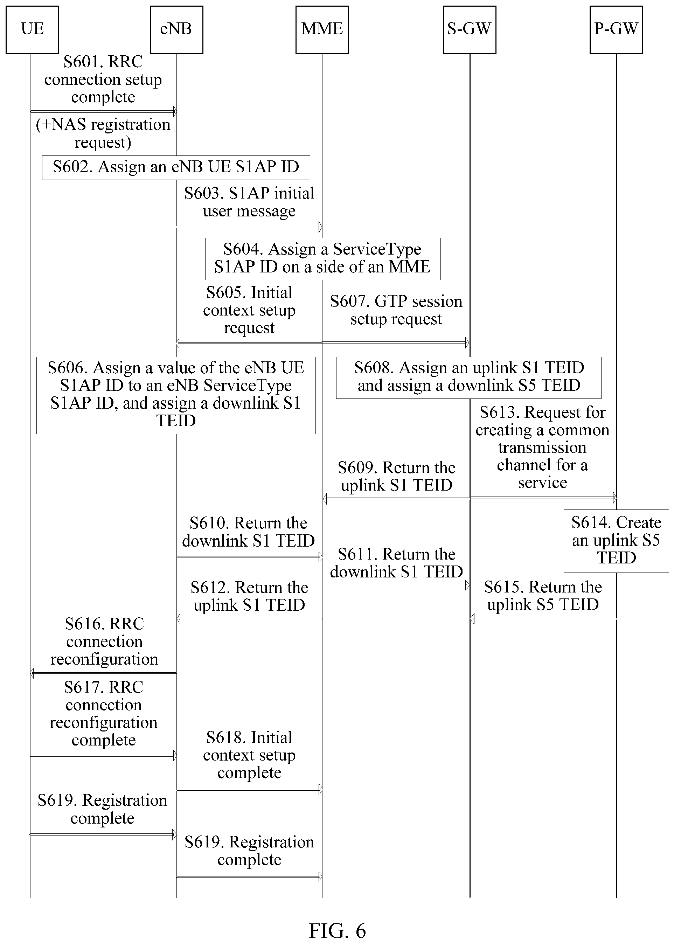

After the common transmission channel is configured, the UE enters an idle state. An optional common transmission channel setup process is shown in FIG. 6, and includes the following steps.

S601. UE of a specified service sends an RRC connection setup complete message to an eNB, where the message carries an NAS registration request.

S602. After receiving the RRC connection setup complete message sent by the UE, the eNB assigns an eNB UE S1AP ID to the UE.

S603. The eNB sends an S1AP initial user message to an MME, where the message carries the NAS registration request and the eNB UE S1AP ID assigned by the eNB.

S604. After receiving the S1AP initial user message, the MME determines that a common transmission channel for the specified service needs to be set up, and assigns a Service Type S1AP ID on a side of the MME to the common transmission channel.

S605. The MME sends an initial context setup request message to the eNB, where the message carries the Service Type S1AP ID assigned by the MME, instructs the eNB to cancel the assigned eNB UE S1AP ID, and assigns a value of the eNB UE S1AP ID to a Service Type S1AP ID on a side of the eNB.

S606. After receiving the initial context setup request message sent by the MME, the eNB assigns the value of the eNB UE S1AP ID to the Service Type S1AP ID on the side of the eNB, and assigns a downlink S1 TEID.

S607. The MME sends a GTP session setup request message to an S-GW.

S608. After receiving the GTP session setup request message, the S-GW assigns an uplink S1 TEID and a downlink S5 TEID to the common transmission channel.

S609. The S-GW returns the assigned uplink S1 TEID to the MME, and the eNB receives the uplink S1 TEID returned by the MME.

S610. The eNB returns the assigned downlink S1 TEID to the MME.

S611. After receiving the downlink S1 TEID returned by the eNB, the MME returns the received downlink S1 TEID to the S-GW.

S612. The MME returns the uplink S1 TEID to the eNB, and the eNB receives the uplink S1 TEID.

S613. The S-GW sends a request message for creating a common transmission channel for a service to the P-GW, where the message carries the downlink S5 TEID assigned by the S-GW.

S614. After receiving the request message for creating a common transmission channel, the P-GW creates an uplink S5 TEID.

S615. The P-GW returns the created uplink S5 TEID to the S-GW.

S616. The eNB sends an RRC connection reconfiguration message to the UE, to configure an air interface parameter of the common transmission channel.

S617. After receiving the RRC connection reconfiguration message, the UE performs air interface configuration for the common transmission channel. After the configuration is completed, the UE sends an RRC connection reconfiguration complete message to the eNB.

S618. After receiving the RRC connection reconfiguration complete message, the eNB sends an initial context setup complete message to the MME, and the MME receives the initial context setup complete message.

S619. The UE sends a registration complete message to the MME by using the eNB.

The common transmission channel setup process is described above by using the example 1. An optional security mechanism for transmitting the data of the specified service is described below by using an example 2.

### [Example 2]

In the example 2, the LTE system is still used as an example for description.

After registering with a core network, UE enters an idle state. Because there is no dedicated security context of the UE on a side of an eNB, no RRC security mechanism can be used. However, during a process in which the UE registers with the core network, an NAS security authentication and key agreement (Authentication and Key Agreement, AKA) process has been completed. Therefore, encryption and integrity protection may be performed on a data packet of a specified service by using an NAS security mechanism.

As described above, there are two optional implementations for a root key: one implementation is that each UE uses a private root key (which is stored in a USIM card and the core network), that is, the root key is dedicated to each UE; and another implementation is that the root key is shared by a common transmission channel.

For a security mode in which a private root key of a user is used, an identifier of the UE, for example, a system architecture evolution-temporary mobile subscriber identity (System Architecture Evolution-Temporary Mobile Subscriber Identity, S-TMSI) needs to be sent together with encrypted data. Because the UE is in an idle state, there is no UE dedicated bearer on an air interface or an S1 interface. After data of the UE reaches an S-GW by using a common transmission channel, the S-GW does not know the data is sent by which UE, that is, the S-GW does not know which root key needs to be used to perform an integration protection check and data decryption. Therefore, the S-TMSI of the UE and the data are sent together, to help the core network obtain the private root key of the UE.

For a security mode in which the root key is shared by the common transmission channel, that is, root keys of UEs of the specified service are the same. In this case, the S-TMSI of the UE does not need to be sent by using an uplink data packet. However, in addition to the key, information such as a bearer ID and a count value are required for generating encrypted ciphertext and a value of a message authentication code for integrity (Message Authentication Code for Integrity, MAC-I) of the integrity protection. The bearer ID may be shared by the specified service, that is, shared by the common transmission channel for the specified service. For example, a value of the bearer ID may be an LCID value corresponding to the specified service, that is, an LCID value of the common transmission channel. Information about the count value also needs to be designed to a fixed number or designed to be generated according to a fixed rule. For example, in a method similar to a method for generating a random access-radio network temporary identifier (Random Access-Radio Network Temporary Identity, RA-RNTI) value in a random access process, a physical resource index of the data used on the air interface is used as the count value. For example, count value=start RB index+SFN+1. If the count value is a count value generated according to a rule, the count value needs to be calculated by the eNB and then notified to the core network.

A process of transmitting the data on the common transmission channel is described below by using an example 3.

### [Example 3]

In the example 3, a process of transmitting a data packet of the specified service by using a common transmission channel is described still by using the LTE system as an example.

### 1. Uplink data transmission

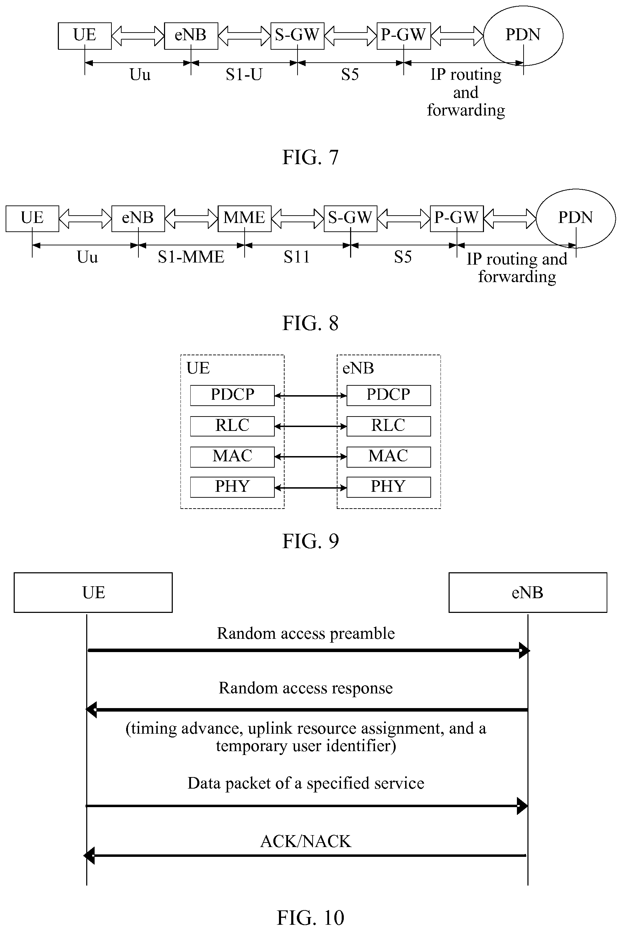

For the path of the common transmission channel shown in FIG. 3, a data packet transmission process may be shown in FIG. 7. Herein, "another network" in FIG. 3 is a PDN.

In the process shown in FIG. 7, an eNB directly sends a data packet to an S-GW.

For the path of the common transmission channel shown in FIG. 4, a data packet transmission process may be shown in FIG. 8. Herein, "another network" in FIG. 4 is a PDN.

In the process shown in FIG. 8, an eNB sends a data packet to an S-GW by using an MME.

The following separately describes processing procedures of a physical layer and a higher layer in a Uu interface when UE needs to send data to the eNB. The higher layer includes a Media Access Control (Media Access Control, MAC) layer, an RLC layer, and a PDCP layer.

FIG. 9 shows a structure of a Uu interface protocol stack. There are a physical layer (PHY), a MAC layer, an RLC layer, and a PDCP layer in sequence from the top to the bottom. Processing of each protocol layer is described below.

### (1) Physical layer

An example in which UE is in an idle state is used herein. The UE already obtains downlink synchronization and receives a configuration of a physical random access channel (Physical Random Access CHannel, PRACH) of a system. If needing to send data, the UE may submit the data to an eNB on the PRACH channel through a random access process at the physical layer. The former two messages in the random access process are the same as those in an existing LTE system. The messages include a random access preamble and a random access response message. In an MSG3 message, a data packet of a specified service is directly sent without sending an RRC connection request message.

The eNB returns acknowledgement (ACKnowledgement, ACK) or negative acknowledgement (Non ACKnowledgement, NACK) by using a physical hybrid automatic repeat request indicator channel (Physical Hybrid-Automatic Repeat-reQuest Indicator Channel, PHICH) channel based on a CRC check result. That is, reliability of data transmission is ensured through a hybrid automatic repeat request (Hybrid-Automatic Repeat-reQuest, HARQ) process at the physical layer. A detailed process may be shown in FIG. 10.

### (2) MAC layer

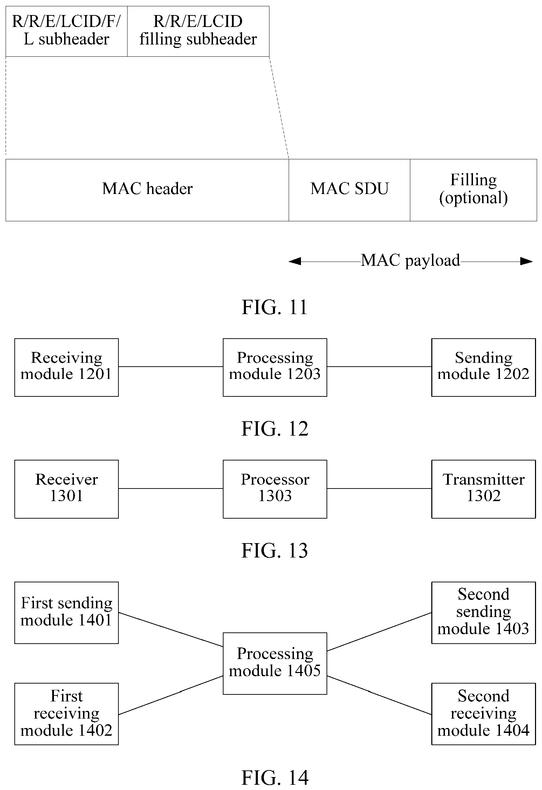

A structure of a MAC protocol data unit (Protocol Data Unit, PDU) is shown in FIG. 11.

R is a reserved bit (bit), and a default value is 0.

E is an end identifier of a MAC header, 0 indicates that the MAC header ends, and 1 indicates that there is MAC header information behind.

F indicates a length of an L domain. If L occupies 7 bits, F is 0, or if L occupies 15 bits, Fis 1.

An LCID is a logical channel identifier. The LCID is 5 bits according to a stipulation in 3GPP TS 36.321 v9.5.0. A value of the LCID may be configured by the eNB to the LCID of the foregoing common transmission channel.

In the MAC PDU, each message body corresponds to a message subheader. Therefore, a MAC service data unit (Service Data Unit, SDU) corresponds to a MAC subheader, and an optional filling part also corresponds to a filling subheader. It can be learned from the foregoing security mechanism that if the UE uses a private root key, the MAC SDU needs to include an S-TMSI of a user.

### (3) RLC layer

A TM mode is used at the RLC layer. The RLC layer is configured to packet and segment a data packet. Optionally, the specified service is a service with a small data volume. If an entire packet of the specified service can be sent during one transmission, the data packet does not need to be packed and segmented.

In addition, optionally, an ARQ function provided by the RLC layer may alternatively be omitted. Correctness of data may be ensured by using a HARQ function of the physical layer. If a HARQ feedback received by the physical layer is always an NACK, the UE may automatically resend the data at a random time interval.

### (4) PDCP layer

The PDCP layer provides an IP header compression function and a security function. If the UE in the idle state transmits data of the specified service, because the UE does not enter an RRC connected state, an RRC layer security function cannot be used, that is, the security function of the PDCP may be omitted.

The IP header compression function may be enabled or disabled based on a configuration of the eNB.

In a current LTE system, after the data packet is processed at the PDCP layer, the processed data packet needs to be submitted by the eNB to an S-GW by using an S1 interface. Optionally, in this application, the data may be submitted to a core network in two manners. One manner is a manner shown in FIG. 8, that is, eNB->MME->S-GW, and the other manner is a manner shown in FIG. 7, that is, eNB->S-GW. Descriptions are separately made below.

### (1) eNB->MME->S-GW

Referring to the example 1, in this application, the common transmission channel may be identified by using the S1AP ID pair (the eNB ServiceType S1AP ID and the MME ServiceType S1AP ID) between the MME and the eNB. The eNB sends data to the MME by using the S1-MME interface identified by the S1AP ID pair. After receiving the data, the MME performs NAS security processing, including an integrity protection check and decryption, and then forwards the data packet to the S-GW.

### 2. eNB->S-GW

Referring to the example 1, in this application, the common transmission channel may be identified by using the GTP tunnel TEID pair (the S1 UL TEID and the S1 DL TEID) between the eNB and the S-GW. The eNB may send data to the S-GW by using the S1-U interface identified by using the S1 UL TEID. In addition, an NAS security processing function is also completed by the S-GW. The MME may transfer security context (which may include a root key, a bearer ID, and a count value) of the UE to the S-GW by using a GTP-C interface (that is, an interface between the MME and the S-GW).

After the data reaches the S-GW, the data is forwarded to the P-GW by using the S5 UL TEID, and the P-GW performs routing and forwarding based on a destination IP address in the data packet.

### 2. Downlink data transmission

During downlink data transmission, both the S5 interface and the S1 interface forward the data by using the DL TEID shared by the common transmission channel. For a detailed process, refer to the uplink transmission part. For an LTE-Uu interface, because the UE is in the idle state, sending is performed by adding an identifier of the UE (for example, an S-TMSI) and the data packet to a paging message.

### [Example 4]

In the foregoing example 1 to example 3, descriptions are made mainly for the UE in the idle state. In the example 4, descriptions are made by using an example in which UE is in a connected state.

After a common transmission channel is set up, an eNB broadcasts an LCID of the common transmission channel for a specified service within a cell to the UE by using a broadcast message, and the UE may obtain the information after completing downlink synchronization of the cell and receiving the broadcast message.

If the UE in the RRC connected state needs to send an uplink data packet of the specified service by using the common transmission channel, the UE may first send a scheduling request (Scheduling Request, SR) and a buffer status report (Buffer Status Report, BSR) message based on an uplink scheduling grant (UL-Grant) application procedure in a current LTE system. Then, the eNB sends the UL-Grant to UE, and the UE sends the uplink data packet of the specified service on an uplink resource indicated by the UL-Grant.

The uplink data packet sent by the UE is considered as a MAC PDU from the perspective of the MAC layer. If the uplink data packet is sent by using a UE-dedicated RRC connection, the LCID should be an LCID corresponding to a data radio bearer (Data Radio Bearer, DRB) ID of the UE. If the uplink data packet is sent by using the common transmission channel for the specified service, the LCID in the MAC PDU should be an LCID of the common transmission channel indicated in the broadcast message of the eNB.

When receiving the uplink data packet, if the eNB identifies the LCID of the common transmission channel, transmission procedures of the subsequent RLC layer, the PDCP layer, the S1 interface, and the S5 interface are the same as those described in the example 3.

In addition, if the UE has registered with a core network, but the LCID of the common transmission channel for the specified service is not received by using the broadcast message of the cell, the UE may apply to set up a common transmission channel from the core network by using a service request (Service Request) NAS message. The service request message includes a type identifier of the specified service and/or indication information used to instruct to set up the common transmission channel. For a common connection setup process after the core network receives the service request message, refer to descriptions in the example 1.

For a moving UE, regardless of an RRC connected state or an idle state, after entering a new cell, the UE needs to listen to a broadcast message of the cell. After obtaining an LCID of a common transmission channel, the common transmission channel can be used. If a data packet of a specified service needs to be sent by using the common transmission channel, but the broadcast message of the cell does not carry the LCID of the common transmission channel, UE that does not register with the core network may apply to set up a common transmission channel through the foregoing attach process, and UE that registers with the core network may apply to set up a common transmission channel through a service request process.

For a method of sending and receiving a downlink data packet of the specified service, refer to the example 3.

FIG. 12 is a schematic structural diagram of a first terminal device according to an embodiment of this application. As shown in FIG. 12, the first terminal device includes:
a receiving module 1201, configured to receive a correspondence between a specified service and a logical channel identifier from a base station, where the logical channel identifier corresponds to a common transmission channel, and the common transmission channel is used to transmit data of the specified service of a plurality of terminal devices; and
a sending module 1202, configured to send an uplink data packet to the base station, where the uplink data packet includes the data of the specified service and the logical channel identifier; and/or
the receiving module 1201, configured to receive a downlink data packet from the base station, where the downlink data packet includes the logical channel identifier and the data of the specified service; and a processing module 1203, configured to determine, based on the logical channel identifier and the correspondence between the specified service and the logical channel identifier, that the downlink data packet includes the data of the specified service.

Optionally, the receiving module 1201 is specifically configured to:
receive a broadcast message or a Radio Resource Control RRC connection reconfiguration message from the base station, where the broadcast message or the RRC connection reconfiguration message includes the correspondence between the specified service and the logical channel identifier.

Optionally, the sending module 1202 is specifically configured to:
send the uplink data packet in a random access process.

Optionally, the sending module 1202 is specifically configured to:
send a message 3 MSG3 in the random access process, where the MSG3 carries the uplink data packet.

Optionally, the receiving module 1201 is specifically configured to:
receive the downlink data packet of the specified service that is sent by the base station by using a paging message.

Optionally, the sending module 1202 is further configured to:
send first information to a mobility management network element, where the first information is used to indicate that the first terminal device is associated with the specified service.

Optionally, the first information includes an identifier of the specified service; or
the first information includes an identifier of the first terminal device.

Optionally, the sending module 1202 is specifically configured to:
send a first message to the mobility management network element, where the first message carries the first information, and the first message is any one of the following:
an attach request message;
a tracking area update request message;
a service request SR message.

Optionally, the common transmission channel is not deleted after the first terminal device enters an idle state.

Optionally, an NAS layer performs encryption and/or integrity protection on the data of the specified service.

Optionally, a root key used in the encryption and/or integrity protection is shared by the common transmission channel; or
a root key used in the encryption and/or integrity protection is dedicated to the first terminal device, and the sending module 1202 is specifically configured to add the identifier of the first terminal device to the uplink data packet for determining the root key.

Optionally, encryption and integrity protection processing of a Packet Data Convergence Protocol PDCP layer is not performed on the data of the specified service.

Optionally, the data of the specified service is processed in a transparent mode TM at a Radio Link Control RLC layer.

For another optional implementation of the first terminal device, refer to the foregoing implementations of the first terminal device 201. The processing module 1203 may be configured to perform processing and control operations of the first terminal device 201. The sending module 1202 may be configured to perform a sending operation when the first terminal device 201 sends the message or the data to the base station 202 or a sending operation when the first terminal device 201 sends the message or the data to the mobility management network element 203 by using the base station 202. The receiving module 1201 may be configured to perform a receiving operation when the first terminal device 201 receives the message or the data from the base station 202, or a receiving operation when the first terminal device 201 receives the message or the data from the mobility management network element 203 by using the base station 202.

For a procedure of interaction between the first terminal device, the base station, and the mobility management network element, refer to the foregoing procedures of interaction between the first terminal device 201 and the base station 202 and interaction between the first terminal device 201 and the mobility management network element 203. For content and structures of the messages sent and received by the first terminal device, refer to descriptions in the procedures.

An optional implementation of the first terminal device may be shown in FIG. 13. A processor 1303 may be configured to implement a function of the processing module 1203, a receiver 1301 may be configured to implement a function of the receiving module 1201, and a transmitter 1302 may be configured to implement a function of the sending module 1202. In addition, the first terminal device may further include a memory, configured to store a program and data. The processor 1303 may perform processing and control by invoking the program stored in the memory.

All of the transmitter 1302, the memory, and the receiver 1301 may be directly connected to the processor 1303. Alternatively, all of the transmitter 1302, the memory, the receiver 1301, and the processor 1303 are connected to a bus. The components communicate with each other by using the bus.

FIG. 14 is a schematic structural diagram of a base station according to an embodiment of this application. As shown in FIG. 14, the base station includes:
a first sending module 1401, configured to send a correspondence between a specified service and a logical channel identifier to a first terminal device, where the logical channel identifier corresponds to a common transmission channel, and the common transmission channel is used to transmit data of the specified service of a plurality of terminal devices; and
a first receiving module 1402, configured to receive an uplink data packet from the first terminal device, where the uplink data packet includes the data of the specified service and the logical channel identifier; a processing module 1405, configured to determine, based on the logical channel identifier in the uplink data packet, that the uplink data packet needs to be transmitted on the common transmission channel; and a second sending module 1403, configured to transmit the uplink data packet on the common transmission channel; and/or
a second receiving module 1404, configured to receive a downlink data packet of the specified service on the common transmission channel, where the first sending module 1401 is further configured to broadcast the downlink data packet, and the downlink data packet includes the logical channel identifier and the data of the specified service.

Optionally, the first sending module 1401 is specifically configured to:
send a broadcast message or a Radio Resource Control RRC connection reconfiguration message, where the broadcast message or the RRC connection reconfiguration message carries the correspondence between the specified service and the logical channel identifier.

Optionally, the first receiving module 1402 is specifically configured to:
receive the uplink data packet in a random access process of the first terminal device.

Optionally, the first receiving module 1402 is specifically configured to:
receive a message 3 MSG3 in the random access process of the first terminal device, where the MSG3 carries the uplink data packet.

Optionally, the first sending module 1401 is specifically configured to:
broadcast the downlink data packet by using a paging message.

Optionally, the second receiving module 1404 is further configured to:
obtain a correspondence between the specified service and the common transmission channel from a mobility management network element.

Optionally, the common transmission channel is not deleted after the first terminal device enters an idle state.

Optionally, encryption and integrity protection processing of a Packet Data Convergence Protocol PDCP layer is not performed on the data of the specified service.

Optionally, the data of the specified service is processed in a transparent mode TM at a Radio Link Control RLC layer.

For another optional implementation of the base station, refer to the foregoing implementations of the base station 202. The processing module 1405 may be configured to perform processing and control operations of the base station 202. The first sending module 1401 may be configured to perform a sending operation when the base station 202 sends the message or the data to the first terminal device 201. The first receiving module 1402 may be configured to perform a receiving operation when the base station 202 receives the message or the data that is sent by the first terminal device 201. The second sending module 1403 may be configured to perform a sending operation when the base station 202 sends the message or the data to the mobility management network element 203 or another network device. The second receiving module 1404 may be configured to perform a receiving operation when the base station 202 receives the message or the data from the mobility management network element 203 or another network device.

For a procedure of interaction between the base station, the first terminal device, and the mobility management network element, refer to the foregoing procedures of interaction between the base station 202, the first terminal device 201, and the mobility management network element 203. For content and structures of the messages sent and received by the base station, refer to descriptions in the procedures.

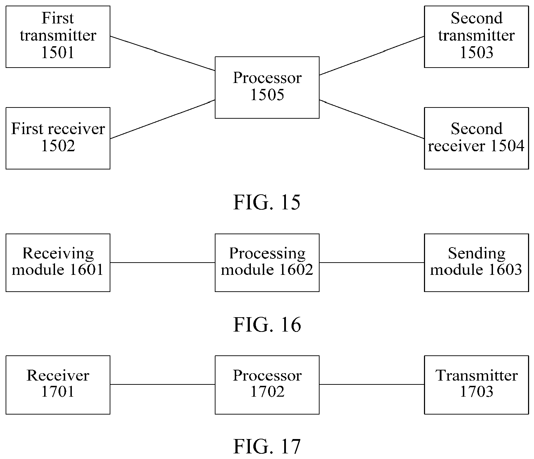

An optional implementation of the base station may be shown in FIG. 15. A processor 1505 may be configured to implement a function of the processing module 1405, a first transmitter 1501 may be configured to implement a function of the first sending module 1401, a first receiver 1502 may be configured to implement a function of the first receiving module 1402, a second transmitter 1503 may be configured to perform a function of the second sending module 1403, and a second receiver 1504 may be configured to implement a function of the second receiving module 1404. The base station may further include a memory, configured to store a program and data. The processor 1505 may perform processing and control by invoking the program stored in the memory.

All of the first transmitter 1501, the memory, the first receiver 1502, the second transmitter 1503, and the second receiver 1504 may be directly connected to the processor 1501. Alternatively, all of the first transmitter 1501, the memory, the first receiver 1502, the second transmitter 1503, the second receiver 1504, and the processor 1501 are connected to a bus. The components communicate with each other by using the bus.

The first transmitter 1501 and the first receiver 1502 are configured to communicate with the first terminal device. The first transmitter 1501 and the first receiver 1502 may be a radio frequency transmitter and a radio frequency receiver. The second transmitter 1503 and the second receiver 1504 are configured to communicate with the mobility management network element or another network device. When the base station is connected to these devices by using an optical fiber, the second transmitter 1503 may be an optical transmitter, and the second receiver 1504 may be an optical receiver. When the base station communicates with these devices by using a microwave, the second transmitter 1503 may be a microwave transmitter, and the second receiver 1504 may be a microwave receiver.

FIG. 16 is a schematic structural diagram of a mobility management network element according to an embodiment of this application. As shown in FIG. 16, the mobility management network element includes:
a receiving module 1601, configured to receive first information from a first terminal device, where the first information is used to indicate that the first terminal device is associated with a specified service; and
a processing module 1602, configured to set up a common transmission channel after the receiving module 1601 receives the first information, where the common transmission channel is used to transmit data of the specified service of a plurality of terminal devices.

Optionally, the first information includes an identifier of the specified service; or
the first information includes an identifier of the first terminal device.

Optionally, the receiving module 1601 is specifically configured to receive a first message from the first terminal device, where the first message carries the first information, and the first message is any one of the following:
an attach request message;
a tracking area update request message;
a service request SR message.

Optionally, the mobility management network element further includes a sending module 1603, configured to send a correspondence between the specified service and the common transmission channel to a base station.

Optionally, the sending module 1603 is further configured to send the data of the specified service by using the common transmission channel; and/or
optionally, the processing module 1602 is further configured to:
perform non-access stratum NAS encryption and/or integrity protection processing on the data of the specified service.

Optionally, the sending module 1603 is further configured to:
send an NAS parameter to a serving gateway, where the NAS parameter is used to perform encryption and/or integrity protection processing on the data of the specified service.

Optionally, the common transmission channel is not deleted after the first terminal device enters an idle state.

For another optional implementation of the mobility management network element, refer to the foregoing implementations of the mobility management network element 203. The processing module 1602 may be configured to perform processing and control operations of the mobility management network element 203. The sending module 1603 may be configured to perform a sending operation when the mobility management network element 203 sends the message or the data to the base station 202 or a sending operation when the mobility management network element 203 sends the message or the data to the first terminal device 201 by using the base station 202. The receiving module 1601 may be configured to perform a receiving operation when the mobility management network element 203 receives the message or the data that is sent by the base station 202 or a receiving operation when the mobility management network element 203 receives, by using the base station 202, the message or the data that is sent by the first terminal device 201.

For a procedure of interaction between the mobility management network element, the terminal device, and the base station, refer to the foregoing procedures of interaction between the mobility management network element 203, the first terminal device 201, and the base station 202. For content and structures of the messages sent and received by the mobility management network element, refer to descriptions in the procedures.

An optional implementation of the mobility management network element may be shown in FIG. 17. A processor 1702 may be configured to implement a function of the processing module 1602, a transmitter 1703 may be configured to implement a function of the sending module, and a receiver may be configured to implement a function of the receiving module 1601. In addition, the mobility management network element may further include a memory, configured to store a program and data. The processor 1702 may perform processing and control by invoking the program stored in the memory.

All of the transmitter, the memory, and the receiver 1701 may be directly connected to the processor 1702. Alternatively, all of the transmitter 1703, the memory, the receiver 1701, and the processor 1702 are connected to a bus. The components communicate with each other by using the bus.

In conclusion, the embodiments of this application provide a terminal device, a network device, and a data transmission method. The terminal device may transmit data of a specified service by using a common transmission channel, thereby avoiding relatively high signaling overheads required for setting up a dedicated bearer and reducing a signaling transmission delay.

Persons skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each procedure and/or each block in the flowcharts and/or the block diagrams, and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more procedures in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

Although some preferred embodiments of this application have been described, persons skilled in the art can make changes and modifications to these embodiments once they learn the basic inventive concept. Therefore, the following claims are intended to be construed as covering the preferred embodiments and all changes and modifications falling within the scope of this application.

Obviously, persons skilled in the art can make various modifications and variations to the embodiments of this application without departing from the spirit and scope of the embodiments of the present invention. This application is intended to cover these modifications and variations provided that they fall within the scope of protection defined by the following claims and their equivalent technologies.

## Claims

1. A data transmission method, comprising:
sending, by a base station, a correspondence between a specified service and a logical channel identifier to a first terminal device, wherein the logical channel identifier corresponds to a common transmission channel, and the common transmission channel is used to transmit data of the specified service of a plurality of terminal devices; and
receiving, by the base station, an uplink data packet from the first terminal device, wherein the uplink data packet comprises the data of the specified service and the logical channel identifier; and sending, by the base station, the uplink data packet on the common transmission channel based on the logical channel identifier in the uplink data packet; and/or
receiving, by the base station, a downlink data packet of the specified service from the common transmission channel, and broadcasting the downlink data packet, wherein the downlink data packet comprises the logical channel identifier and the data of the specified service.

2. The method according to claim 1, wherein the sending, by a base station, a correspondence between a specified service and a logical channel identifier to a first terminal device comprises:
sending, by the base station, a broadcast message or a Radio Resource Control RRC connection reconfiguration message, wherein the broadcast message or the RRC connection reconfiguration message carries the correspondence between the specified service and the logical channel identifier.

3. The method according to claim 1 or 2, wherein the receiving, by the base station, an uplink data packet from the first terminal device comprises:
receiving, by the base station, the uplink data packet in a random access process of the first terminal device.

4. The method according to claim 3, wherein the receiving, by the base station, the uplink data packet in a random access process of the first terminal device comprises:
receiving, by the base station, a message 3 MSG3 in the random access process of the first terminal device, wherein the MSG3 carries the uplink data packet.

5. The method according to any one of claims 1 to 4, wherein the broadcasting, by the base station, the downlink data packet comprises:
broadcasting, by the base station, the downlink data packet by using a paging message.

6. The method according to any one of claims 1 to 5, further comprising:
obtaining, by the base station, a correspondence between the specified service and the common transmission channel from a mobility management network element.

7. The method according to any one of claims 1 to 6, wherein
the common transmission channel is not deleted after the first terminal device enters an idle state.

8. The method according to any one of claims 1 to 7, wherein
encryption and integrity protection processing of a Packet Data Convergence Protocol PDCP layer is not performed on the data of the specified service.

9. The method according to any one of claims 1 to 8, wherein the data of the specified service is processed in a transparent mode TM at a Radio Link Control RLC layer.

10. A method for setting up a common transmission channel, comprising:
receiving, by a mobility management network element, first information from a first terminal device, wherein the first information is used to indicate that the first terminal device is associated with a specified service; and
setting up, by the mobility management network element, a common transmission channel after receiving the first information, wherein the common transmission channel is used to transmit data of the specified service of a plurality of terminal devices.

11. The method according to claim 10, wherein
the first information comprises an identifier of the specified service; or
the first information comprises an identifier of the first terminal device.

12. The method according to claim 10 or 11, wherein the receiving, by a mobility management network element, first information from a first terminal device comprises: receiving, by the mobility management network element, a first message from the first terminal device, wherein the first message carries the first information, and the first message is any one of the following:
an attach request message;
a tracking area update request message;
a service request SR message.

13. The method according to any one of claims 10 to 12, further comprising:
sending, by the mobility management network element, a correspondence between the specified service and the common transmission channel to a base station.

14. The method according to any one of claims 10 to 13, further comprising: transmitting, by the mobility management network element, the data of the specified service by using the common transmission channel.

15. The method according to claim 14, further comprising:
performing, by the mobility management network element, non-access stratum NAS encryption and/or integrity protection processing on the data of the specified service.

16. The method according to any one of claims 10 to 13, further comprising:
sending, by the mobility management network element, an NAS parameter to a serving gateway, wherein the NAS parameter is used to perform encryption and/or integrity protection processing on the data of the specified service.

17. The method according to any one of claims 10 to 16, wherein
the common transmission channel is not deleted after the first terminal device enters an idle state.

18. Abase station, comprising:
a first sending module, configured to send a correspondence between a specified service and a logical channel identifier to a first terminal device, wherein the logical channel identifier corresponds to a common transmission channel, and the common transmission channel is used to transmit data of the specified service of a plurality of terminal devices; and
a first receiving module, configured to receive an uplink data packet from the first terminal device, wherein the uplink data packet comprises the data of the specified service and the logical channel identifier; a processing module, configured to determine, based on the logical channel identifier in the uplink data packet, that the uplink data packet needs to be transmitted on the common transmission channel; and a second sending module, configured to transmit the uplink data packet on the common transmission channel; and/or
a second receiving module, configured to receive a downlink data packet of the specified service from the common transmission channel, wherein the first sending module is further configured to broadcast the downlink data packet, and the downlink data packet comprises the logical channel identifier and the data of the specified service.

19. The base station according to claim 18, wherein the first sending module is specifically configured to:
send a broadcast message or a Radio Resource Control RRC connection reconfiguration message, wherein the broadcast message or the RRC connection reconfiguration message carries the correspondence between the specified service and the logical channel identifier.

20. The base station according to claim 18 or 19, wherein the first receiving module is specifically configured to:
receive the uplink data packet in a random access process of the first terminal device.

21. The base station according to claim 20, wherein the first receiving module is specifically configured to:
receive a message 3 MSG3 in the random access process of the first terminal device, wherein the MSG3 carries the uplink data packet.

22. The base station according to any one of claims 18 to 21, wherein the first sending module is specifically configured to:
broadcast the downlink data packet by using a paging message.

23. The base station according to any one of claims 18 to 22, wherein the second receiving module is further configured to:
obtain a correspondence between the specified service and the common transmission channel from a mobility management network element.

24. The base station according to any one of claims 18 to 23, wherein
the common transmission channel is not deleted after the first terminal device enters an idle state.

25. The base station according to any one of claims 18 to 24, wherein
encryption and integrity protection processing of a Packet Data Convergence Protocol PDCP layer is not performed on the data of the specified service.

26. The base station according to any one of claims 18 to 25, wherein the data of the specified service is processed in a transparent mode TM at a Radio Link Control RLC layer.

27. A first terminal device, comprising:
a receiving module, configured to receive a correspondence between a specified service and a logical channel identifier from a base station, wherein the logical channel identifier corresponds to a common transmission channel, and the common transmission channel is used to transmit data of the specified service of a plurality of terminal devices; and
a sending module, configured to send an uplink data packet to the base station, wherein the uplink data packet comprises the data of the specified service and the logical channel identifier; and/or
the receiving module, further configured to receive a downlink data packet from the base station, wherein the downlink data packet comprises the logical channel identifier and the data of the specified service; and a processing module, configured to determine, based on the logical channel identifier and the correspondence between the specified service and the logical channel identifier, that the downlink data packet comprises the data of the specified service.

28. The first terminal device according to claim 27, wherein the receiving module is specifically configured to:
receive a broadcast message or a Radio Resource Control RRC connection reconfiguration message from the base station, wherein the broadcast message or the RRC connection reconfiguration message comprises the correspondence between the specified service and the logical channel identifier.

29. The first terminal device according to claim 27 or 28, wherein the sending module is specifically configured to send the uplink data packet in a random access process.

30. The first terminal device according to claim 29, wherein the sending module is specifically configured to send a message 3 MSG3 in the random access process, and the MSG3 carries the uplink data packet.

31. The first terminal device according to any one of claims 27 to 30, wherein the receiving module is specifically configured to:
receive the downlink data packet of the specified service that is sent by the base station by using a paging message.

32. The first terminal device according to any one of claims 27 to 31, wherein the sending module is further configured to:
send first information to a mobility management network element, wherein the first information is used to indicate that the first terminal device is associated with the specified service.

33. The first terminal device according to claim 32, wherein
the first information comprises an identifier of the specified service; or
the first information comprises an identifier of the first terminal device.

34. The first terminal device according to claim 32 or 33, wherein the sending module is specifically configured to:
send a first message to the mobility management network element, wherein the first message carries the first information, and the first message is any one of the following:
an attach request message;
a tracking area update request message;
a service request SR message.

35. The first terminal device according to any one of claims 27 to 34, wherein
the common transmission channel is not deleted after the first terminal device enters an idle state.

36. The first terminal device according to any one of claims 27 to 35, wherein
an NAS layer performs encryption and/or integrity protection on the data of the specified service.

37. The first terminal device according to claim 36, wherein
a root key used in the encryption and/or integrity protection is shared by the common transmission channel; or
a root key used in the encryption and/or integrity protection is dedicated to the first terminal device, and the sending module is specifically configured to add the identifier of the first terminal device to the uplink data packet for determining the root key.

38. The first terminal device according to any one of claims 27 to 37, wherein
encryption and integrity protection processing of a Packet Data Convergence Protocol PDCP layer is not performed on the data of the specified service.

39. The first terminal device according to any one of claims 27 to 38, wherein the data of the specified service is processed in a transparent mode TM at a Radio Link Control RLC layer.

40. A mobility management network element, comprising:
a receiving module, configured to receive first information from a first terminal device, wherein the first information is used to indicate that the first terminal device is associated with a specified service; and
a processing module, configured to set up a common transmission channel after the receiving module receives the first information, wherein the common transmission channel is used to transmit data of the specified service of a plurality of terminal devices.

41. The mobility management network element according to claim 40, wherein
the first information comprises an identifier of the specified service; or
the first information comprises an identifier of the first terminal device.

42. The mobility management network element according to claim 40 or 41, wherein the receiving module is specifically configured to receive a first message from the first terminal device, wherein the first message carries the first information, and the first message is any one of the following:
an attach request message;
a tracking area update request message;
a service request SR message.

43. The mobility management network element according to any one of claims 40 to 41, wherein the mobility management network element further comprises a sending module, configured to send a correspondence between the specified service and the common transmission channel to a base station.

44. The mobility management network element according to any one of claims 40 to 42, wherein
the mobility management network element further comprises a sending module, configured to send the data of the specified service by using the common transmission channel; and/or
the receiving module is further configured to receive the data of the specified service by using the common transmission channel.

45. The mobility management network element according to claim 44, wherein the processing module is further configured to:
perform non-access stratum NAS encryption and/or integrity protection processing on the data of the specified service.

46. The mobility management network element according to any one of claims 40 to 42, wherein the mobility management network element further comprises a sending module, configured to send an NAS parameter to a serving gateway, and the NAS parameter is used to perform encryption and/or integrity protection processing on the data of the specified service.

47. The mobility management network element according to any one of claims 40 to 46, wherein
the common transmission channel is not deleted after the first terminal device enters an idle state.

48. A wireless communications system, comprising:
the base station according to any one of claims 18 to 26; and
the mobility management network element according to any one of claims 40 to 47.

49. The system according to claim 48, further comprising:
the first terminal device according to any one of claims 27 to 39.
